(19) Europäisches Patentamt
European Patent Office
Office européen des brevets

(11) **EP 3 796 168 A1**

(12) **EUROPEAN PATENT APPLICATION**

(43) Date of publication:
**24.03.2021 Bulletin 2021/12**

(51) Int Cl.:
**G06F 9/50** *(2006.01)*     **G06F 13/16** *(2006.01)*
**G06F 15/173** *(2006.01)*     **G06F 15/78** *(2006.01)*
**G06F 9/455** *(2018.01)*

(21) Application number: **20192975.9**

(22) Date of filing: **26.08.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.09.2019 JP 2019170412**

(71) Applicant: **FUJITSU LIMITED**
**Kanagawa 211-8588 (JP)**

(72) Inventor: **HYOUDOU, Kazuki**
**Kawasaki-shi, Kanagawa 211-8588 (JP)**

(74) Representative: **Haseltine Lake Kempner LLP**
**Cheapside House**
**138 Cheapside**
**London**
**EC2V 6BJ (GB)**

(54) **INFORMATION PROCESSING APPARATUS, INFORMATION PROCESSING METHOD, AND VIRTUAL MACHINE CONNECTION MANAGEMENT PROGRAM**

(57) An information processing apparatus includes a memory configured to include a reception buffer in which data destined for a virtual machine that operates in the information processing apparatus is written, and a processor coupled to the memory and configured to continuously allocate a first storage area of the reception buffer to a first coprocessor which is an offload destination of a relay process of a virtual switch, and allocate a second storage area of the reception buffer to a second coprocessor which is an offload destination of an extension process of the virtual switch when an allocation request of the reception buffer is received from the second coprocessor.

FIG. 1

EP 3 796 168 A1

**Description**

FIELD

The embodiments discussed herein are related to an information processing apparatus, an information processing method, and a virtual machine connection management program.

BACKGROUND

In the field of information processing, a virtualization technology that operates a plurality of virtual computers (sometimes called virtual machines or virtual hosts) on a physical computer (sometimes called a physical machine or a physical host) is used. Each virtual machine may execute software such as an OS (Operating System). A physical machine using a virtualization technology executes software for managing the plurality of virtual machines. For example, software called a hypervisor may allocate processing capacity of a CPU (Central Processing Unit) and a storage area of a RAM (Random Access Memory) to a plurality of virtual machines, as computational resources.

A virtual machine may communicate with other virtual machines and other physical machines via a data relay function called a virtual switch implemented in a hypervisor. For example, there is a proposal to reduce the computational load on a host machine by offloading a task of a virtual switch from the host machine to a network interface card (NIC).

Meanwhile, when a new virtual machine for load distribution is deployed on a communication path between a host OS and a guest OS, there is also a proposal to operate a back-end driver on the host OS on the new virtual machine while maintaining the buffer contents, thereby deploying the load distribution function dynamically while maintaining the state on the way of communication.

Related technologies are disclosed in, for example, Japanese Laid-open Patent Publication Nos. 2015-039166 and 2016-170669.

SUMMARY

It is desirable to provide an information processing apparatus, an information processing method, and a virtual machine connection management program capable of reducing the amount of data flowing on a bus.

According to an embodiment of one aspect, an information processing apparatus includes a memory configured to include a reception buffer in which data destined for a virtual machine that operates in the information processing apparatus is written, and a processor coupled to the memory and configured to continuously allocate a first storage area of the reception buffer to a first coprocessor which is an offload destination of a relay process of a virtual switch, and allocate a second storage area of the reception buffer to a second coprocessor which is an offload destination of an extension process of the virtual switch when an allocation request of the reception buffer is received from the second coprocessor.

BRIEF DESCRIPTION OF DRAWINGS

FIG. 1 is a view illustrating a processing example of an information processing apparatus according to a first embodiment;
FIG. 2 is a view illustrating an example of an information processing system according to a second embodiment;
FIG. 3 is a block diagram illustrating a hardware example of a server;
FIG. 4 is a view illustrating an example of a virtualization mechanism;
FIG. 5 is a view illustrating an example of offload of a virtual switch;
FIG. 6 is a view illustrating an example of offload of a relay function and an extension function;
FIG. 7 is a view illustrating an example of the function of a server;
FIG. 8 is a view illustrating an example (continuation) of the function of a server;
FIG. 9 is a view illustrating an example of a process of a reservation unit;
FIG. 10 is a view illustrating an example of a distribution process by an arbitration unit;
FIG. 11 is a view illustrating an example of a distribution process by an arbitration unit (continued);
FIG. 12 is a view illustrating an example of an arbitration process by an arbitration unit;
FIG. 13 is a view illustrating an example of an arbitration process by an arbitration unit (continued);
FIG. 14 is a flowchart illustrating an example of a process of an FPGA for relay function;
FIG. 15 is a flowchart illustrating an example of a process of an FPGA for extension function;
FIG. 16 is a flowchart illustrating an example of a distribution process for a relay function FPGA;

FIG. 17 is a flowchart illustrating an example of a distribution process for an extension function FPGA;

FIG. 18 is a flowchart illustrating an example of an arbitration process;

FIG. 19 is a flowchart illustrating an example of a reception process of a virtual machine;

FIG. 20 is a view illustrating an example of a communication via a bus; and

FIG. 21 is a view illustrating a comparative example of a communication via a bus.

DESCRIPTION OF EMBODIMENTS

The function of a virtual switch may be offloaded from a processor of a physical machine to a coprocessor such as an FPGA (Field-Programmable Gate Array) or a smart NIC (Network Interface Card). Here, in addition to a relay function, the virtual switch may execute an extension function such as cryptographic processing and data compression. Meanwhile, the computational resources of coprocessor are relatively small, and it may be difficult to offload both the relay function and the extension function to a single coprocessor. Therefore, it is conceivable to offload the relay function and the extension function to separate coprocessors.

A reception buffer on a RAM that a virtual machine accesses may be implemented by a single queue. For example, it is conceivable that among multiple coprocessors of the offload destination of each function, only a coprocessor in charge of the relay function that is the main function is in charge of a process of writing received data destined for a virtual machine on a physical machine in the reception buffer. In this case, the coprocessor in charge of the relay function transmits received data that is the target of the extension process among the received data to another coprocessor in charge of the extension function, acquires the received data after the extension process from the another coprocessor, and writes the received data in a reception buffer of a destination virtual machine.

However, in this method, with respect to the received data of the extension process target, a return communication occurs between coprocessors on an internal bus of the physical machine from one coprocessor to another coprocessor and from the another coprocessor to the one coprocessor. For this reason, the amount of data flowing through the internal bus increases such that the internal bus becomes highly loaded, and as a result, the performance of the entire physical machine may be deteriorated.

Hereinafter, embodiments of the technology which may reduce the amount of data flowing on a bus will be described with reference, by way of example only, to the accompanying drawings.

First Embodiment

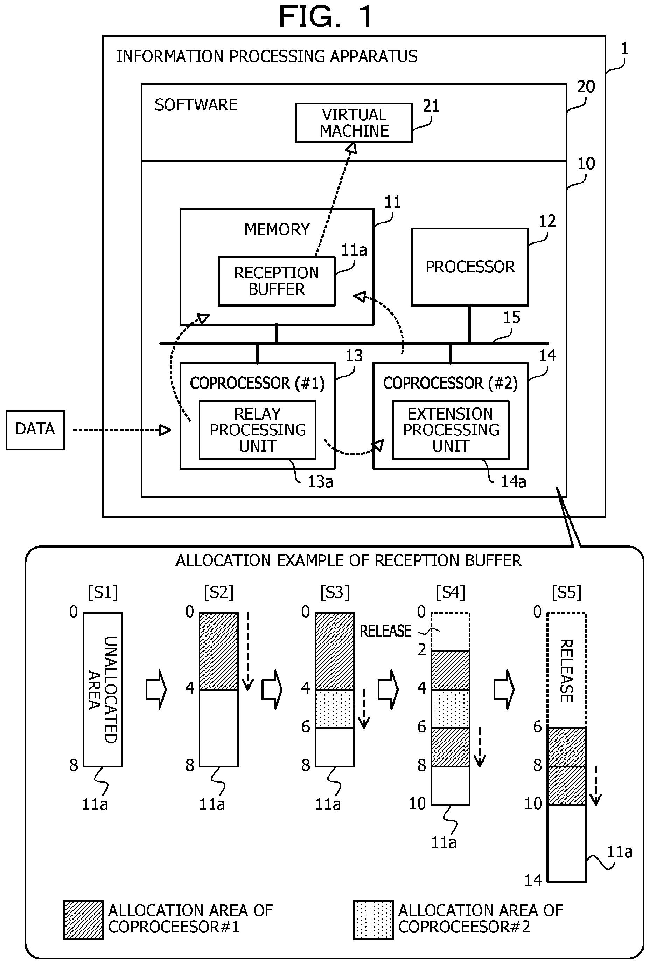

FIG. 1 is a view illustrating a processing example of an information processing apparatus according to a first embodiment. The information processing apparatus 1 executes one or more virtual machines. The information processing apparatus 1 executes, for example, a hypervisor (not illustrated in FIG. 1) and allocates computational resources of the information processing apparatus 1 to each virtual machine by the function of the hypervisor.

The information processing apparatus 1 includes hardware 10 and software 20. The hardware 10 includes a memory 11, a processor 12, coprocessors 13 and 14, and a bus 15. The memory 11, the processor 12, and the coprocessors 13 and 14 are connected to the bus 15. The hardware 10 also includes an NIC (not illustrated) that connects to the network. The software 20 includes a virtual machine 21 and a hypervisor (not illustrated).

The memory 11 is a main storage device such as a RAM. The memory 11 includes a reception buffer 11a. The reception buffer 11a stores data whose destination is the virtual machine 21. The reception buffer 11a is implemented by a single queue. A writing operation may be performed in the reception buffer 11a by each of the coprocessors 13 and 14. The reception buffer is provided for each virtual machine. The information processing apparatus 1 may include an auxiliary storage device such as an HDD (Hard Disk Drive) or an SSD (Solid State Drive), in addition to the memory 11.

The processor 12 is an arithmetic unit such as a CPU. The processor 12 may also include a set of plural processors (multiprocessor). The processor 12 executes software programs such as the virtual machine 21 and the hypervisor stored in the memory 11. The processor 12 controls the allocation of the storage area of the reception buffer 11a to each of the coprocessors 13 and 14.

The coprocessors 13 and 14 are auxiliary arithmetic units used as offload destinations of a virtual switch function executed by the processor 12. The coprocessors 13 and 14 are able to directly write data by the respective coprocessors 13 and 14 in the storage area of the reception buffer 11a allocated by the processor 12. The coprocessors 13 and 14 are implemented by, for example, an FPGA or a smart NIC. The virtual switch has a relay function of specifying a virtual machine for which received data are destined, and an extension function such as a cryptographic process (encryption or decryption) and a data compression process (or decompression process) for the received data. The processor 12 offloads the relay function of the virtual switch to the coprocessor 13. The processor 12 offloads the extension function of the virtual switch to the coprocessor 14. The offloading reduces the load on the processor 12. Meanwhile, a plurality of coprocessors may be the offload destinations of the extension function of the virtual switch.

The coprocessor 13 includes a relay processing unit 13a. The relay processing unit 13a performs a processing related to the relay function of the virtual switch (relay processing). The relay processing unit 13a relays data received at a physical port (not illustrated) on the NIC of the information processing apparatus 1. When the data destined for the virtual machine 21 operating in its own apparatus (*e.g.*, the information processing apparatus 1) is received, the relay processing unit 13a determines whether or not the data is a target of a process related to the extension function (extension process). When the data is the target of the extension process, the relay processing unit 13a transfers the data to the coprocessor 14 via the bus 15. The relay processing unit 13a writes data other than the target data of the extension process, among the data destined for the virtual machine 21 received at the physical port, in the storage area (allocation area of the coprocessor 13) in the reception buffer 11a allocated for the coprocessor 13. Whether or not the data is the target data of the extension process is determined based on, for example, rule information maintained by the coprocessor 13 that is predetermined for header information or the like added to the data.

The coprocessor 14 includes an extension processing unit 14a. The extension processing unit 14a performs the extension process on the data of the target of the extension process received from the coprocessor 13. The extension process is, for example, the above-described cryptographic process (encryption or decryption), a data compression process, and a decompression process of compressed data. The coprocessor 14 writes the processed data in the storage area within the reception buffer 11a allocated for the coprocessor 14 (an allocation area of the coprocessor 14).

The virtual machine 21 is implemented by using resources such as the memory 11 and the processor 12. The virtual machine 21 communicates with a virtual machine operating either on the information processing apparatus 1 or on another information processing apparatus, or communicates with another information processing apparatus, by the function of the virtual switch offloaded to the coprocessors 13 and 14. The virtual machine 21 acquires the data stored in the reception buffer 11a and destined for the virtual machine 21, and processes the data. The virtual machine 21 releases the storage area of the reception buffer 11a in which the processed data are stored. Since the virtual machine 21 is executed by the processor 12, it may be said that the process executed by the virtual machine 21 is also the process executed by the processor 12.

In this way, in the information processing apparatus 1, the relay function of the virtual switch, which is normally executed by the processor 12, is offloaded to the coprocessor 13, and the extension function of the virtual switch accompanying the relay function, is offloaded to the coprocessor 14. Then, both of the coprocessors 13 and 14 may directly write data to the reception buffer 11a of the virtual machine 21.

Therefore, the processor 12 continuously allocates a first storage area of the reception buffer 11a to the coprocessor 13 which is the offload destination of the relay process of the virtual switch. The processor 12 also allocates a second storage area of the reception buffer 11a to the coprocessor 14, which is the offload destination of the extension process of the virtual switch, when an allocation request for the reception buffer 11a is received from the coprocessor 14.

More specifically, the processor 12 allocates the first storage area of the reception buffer 11a to the coprocessor 13, and when at least a portion of the first storage area is released, the processor 12 allocates an additional storage area according to the size of the released area to the coprocessor 13. When the allocation request for the reception buffer 11a is received from the coprocessor 14, the processor 12 allocates the second storage area of the size requested by the allocation request to the coprocessor 14. For example, the processor 12 processes the data written in the storage area in an order of allocation of the storage area of the reception buffer 11a by the function of the virtual machine 21. The processor 12 releases the processed storage area (*e.g.*, the storage area in which the processed data has been stored).

Next, an example of the allocation of the reception buffer 11a to the coprocessors 13 and 14 by the processor 12 is described. In FIG. 1, the coprocessor 13 may be referred to as a "coprocessor#1" and the coprocessor 14 may be referred to as a "coprocessor #2."

For example, when the virtual machine 21 is activated, the processor 12 allocates an area of a first size in the memory 11 as the reception buffer 11a for the virtual machine 21 (operation S1). The first size is set to, for example, 8. Initially, the entire areas of the reception buffer 11a are unallocated areas. An index (or address) indicating the beginning of the reception buffer 11a is 0. An index indicating the end of the reception buffer 11a is 8. The unallocated area of the reception buffer 11a is allocated to each coprocessor in an order from the smallest index.

The processor 12 allocates the first storage area of the reception buffer 11a to the coprocessor 13 (operation S2). For example, the processor 12 allocates an area of a predetermined second size to the coprocessor 13. The second size is set to, for example, 4. Then, the processor 12 allocates to the coprocessor 13 a storage area in the reception buffer 11a where the index i corresponds to $0 \leq i < 4$ (first storage area). It is expected that the data written from the coprocessor 13 in charge of the relay function to the reception buffer 11a will be continuously generated. Therefore, the processor 12 maintains the storage area allocated to the coprocessor 13 (first storage area) so as to have the second size.

The processor 12 receives an allocation request for the reception buffer 11a from the coprocessor 14. Then, the processor 12 allocates the second storage area of the reception buffer 11a corresponding to a request size included in the allocation request to the coprocessor 14 (operation S3). By allocating a necessary storage area to the coprocessor 14, the reception buffer 11a may be used efficiently. For example, when the target data of the extension process is received, the coprocessor 14 transmits an allocation request for the reception buffer 11a to the processor 12 in order to reserve a storage area for writing the extension-processed data. The coprocessor 14 designates to the processor 12 by an allocation request including a request size corresponding to the data to be written. Here, as an example, it is assumed that the request size is 2. Then, the processor 12 allocates a storage area corresponding to $4 \leq i < 6$ (second storage area) in the reception buffer 11a to the coprocessor 14.

Here, the relay function is a function accompanying the extension function, and not all of the received data received by the relay processing unit 13a are the target of the extension function. Therefore, when there is an allocation request from the coprocessor 14, the processor 12 allocates the second storage area corresponding to the request size to the coprocessor 14.

For example, when the target data of the extension process is received from the coprocessor 13, the coprocessor 14 may start the extension process for the data, and notify the processor 12 of the allocation request for the reception buffer 11a. Since the extension process requires time, by notifying the allocation request at the same time of the start of the extension process, the processed data may be quickly written in the reception buffer 11a.

The processor 12 (or the virtual machine 21 executed by the processor 12) processes the data written in the storage area in the storage area allocation order of the reception buffer 11a. That is, the processor 12 processes the data written in the reception buffer 11a in a FIFO (First In, First Out) procedure. For example, the processor 12 processes the data written by the coprocessor 13 in a storage area corresponding to $0 \leq i < 2$ of the reception buffer 11a. Thereafter, the processor 12 releases the storage area corresponding to $0 \leq i < 2$ (operation S4). Since the processor 12 has released the storage area (size 2) corresponding to $0 \leq i < 2$, the processor adds 2 to the index at the end of the reception buffer 11a. Then, the index at the beginning of the reception buffer 11a becomes 2, and the index at the end becomes 10. Here, the storage area released in operation S4 is a portion of the first storage area allocated to the coprocessor 13 that is the offload destination of the relay function. Therefore, the processor 12 additionally allocates a storage area corresponding to $6 \leq i < 8$ corresponding to the size 2 of the released storage area to the coprocessor 13. In this way, the first storage area of the second size is always and continuously allocated to the coprocessor 13.

Subsequently, the processor 12 (or the virtual machine 21 executed by the processor 12) processes the data written by the coprocessor 13 in a storage area corresponding to, for example, $2 \leq i < 4$. Further, the processor 12 (or the virtual machine 21 executed by the processor 12) processes the data written by the coprocessor 14 in a storage area corresponding to, for example, $4 \leq i < 6$. The processor 12 releases the storage area corresponding to $2 \leq i < 6$ (operation S5). Since the processor 12 has released the storage area corresponding to $2 \leq i < 6$ (size 4), 4 is added to the index at the end of the reception buffer 11a. Then, the index at the beginning of the reception buffer 11a becomes 6 and the index at the end becomes 14. Here, the storage area corresponding to $2 \leq i < 4$ released in operation S5 is a portion of the first storage area allocated to the coprocessor 13. Therefore, the processor 12 additionally allocates a storage area corresponding to $8 \leq i < 10$ corresponding to the size 2 of the released storage area corresponding to $2 \leq i < 4$ to the coprocessor 13. Thereafter, the processor 12 repeats the above procedure (the process similar to operation S3 is executed when the coprocessor 14 places an allocation request).

As described above, according to the information processing apparatus 1, the first storage area of the reception buffer is continuously allocated to the first coprocessor that is the offload destination of the relay process of the virtual switch. The second storage area of the reception buffer is also allocated to the second coprocessor, which is the offload destination of the extension process of the virtual switch, when the reception buffer allocation request is received from the second coprocessor. As a result, the amount of data flowing on the bus 15 may be reduced.

Here, since data is written to the reception buffer 11a which is a single queue in an order of reception, and is sequentially processed by the virtual machine 21, it is also considered that the storage area of the reception buffer 11a is allocated only to the coprocessor 13 among the coprocessors 13 and 14. However, in this case, since the received data the target of the extension process is transmitted from the coprocessor 13 to the coprocessor 14, and then, is written in the reception buffer 11a, a return communication from the coprocessor 14 to the coprocessor 13 occurs. Therefore, a large band of the bus 15 is consumed, and the performance of the information processing apparatus 1 may be deteriorated.

In contrast, it is conceivable that data may be directly written in the reception buffer 11a from both of the coprocessors 13 and 14. When the data can be directly written in the reception buffer 11a from both of the coprocessors 13 and 14, the above-mentioned return communication between the coprocessors 13 and 14 does not occur, thereby reducing the band consumption of the bus 15. However, at this time, there is a problem with an implementation method for not affecting any influence on the process of the virtual machine 21 using the reception buffer 11a (single queue). This is because, when modification of the virtual machine side is involved, a virtual machine image provided by a third party may not be used, and the portability which is an advantage of virtualization may be impaired.

Therefore, the processor 12 continuously allocates a storage area of a predetermined size to the coprocessor 13, which is the offload destination of the relay function, and allocates a storage area to the coprocessor 14 when there is an allocation request from the coprocessor 14.

The reason for continuously allocating a storage area of a predetermined size to the coprocessor 13 is that the data written in the reception buffer 11a from the coprocessor 13 in charge of the relay function is expected to be continuously generated. Further, the reason for allocating a storage area to the coprocessor 14 in response to the allocation request is that the relay function is a function accompanying the extension function and not all the data received from the outside by the relay processing unit 13a is the target of the extension function.

For example, it may be simply conceivable to always allocate a storage area of a predetermined size to both the coprocessors 13 and 14. However, in a case where the reception buffer 11a is processed by the FIFO, when there is another storage area in which a data writing is completed after a storage area in which data is unwritten, the data written in the another storage area may not be processed unless a data writing is completed in the storage area in which data is unwritten. Therefore, for example, until a data writing to an allocation area of the coprocessor 14 occurs, a process for written data in an allocation area of the coprocessor 13 after the allocation area of the coprocessor 14 may be delayed.

Therefore, in order to reduce the delay, the processor 12 allocates the storage area of the reception buffer 11a to the coprocessor 14 which is the offload destination of the extension function, when an allocation request is received (*e.g.*, only when required by the coprocessor 14).

Thus, according to the information processing apparatus 1, it is possible to directly write data in the reception buffer 11a from the coprocessors 13 and 14, and reduce the amount of data flowing on the bus 15. Further, it is possible to reduce the possibility of the large band consumption of the bus 15 and the deteriorated performance of the information processing apparatus 1.

Second Embodiment

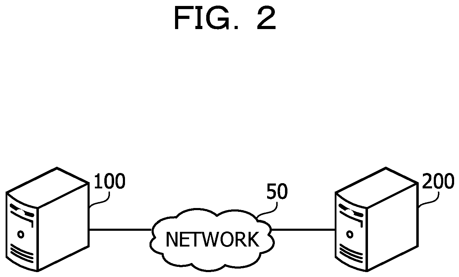

FIG. 2 is a view illustrating an example of an information processing system according to a second embodiment.

The information processing system according to the second embodiment includes servers 100 and 200. The servers 100 and 200 are connected to a network 50. The network 50 is, for example, a LAN (Local Area Network), a WAN (Wide Area Network), the Internet, or the like.

Each of the servers 100 and 200 is a server computer capable of executing a virtual machine. The servers 100 and 200 may be called physical machines, physical hosts, or the like. A virtual machine on the server 100 and a virtual machine on the server 200 are capable of communicating with each other via the network 50. The virtual machine is also capable of communicating with other physical machines (not illustrated) connected to the network 50. The virtual machine on the server 100 is connected to a virtual switch executed by the server 100. Similarly, the virtual machine on the server 200 is connected to a virtual switch executed by the server 200.

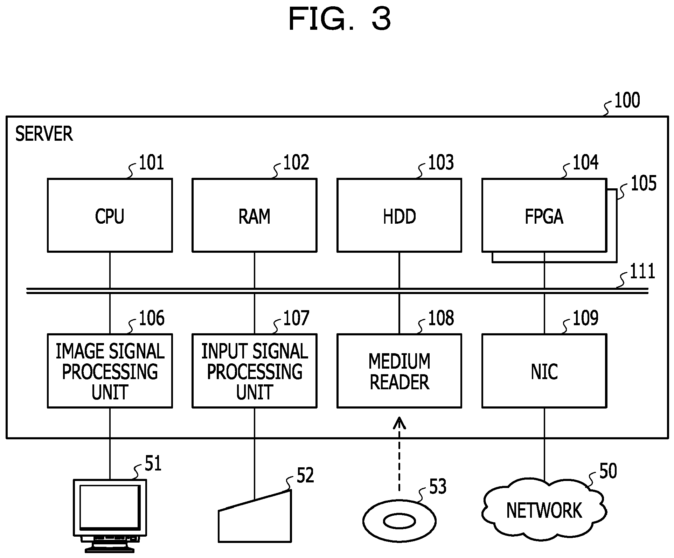

FIG. 3 is a block diagram illustrating a hardware example of a server. The server 100 includes a CPU 101, a RAM 102, an HDD 103, FPGAs 104 and 105, an image signal processing unit 106, an input signal processing unit 107, a medium reader 108, and an NIC 109. These hardware components are connected to a bus 111 of the server 100. The CPU 101 corresponds to the processor 12 of the first embodiment. The RAM 102 corresponds to the memory 11 of the first embodiment.

The CPU 101 is a processor that executes an instruction of a program. The CPU 101 loads at least a portion of programs and data stored in the HDD 103 into the RAM 102 and executes the programs. The CPU 101 may include plural processor cores. Further, the server 100 may have plural processors. The processes to be described below may be executed in parallel using plural processors or processor cores. A set of plural processors may be referred to as a "multiprocessor" or simply "processor."

The RAM 102 is a volatile semiconductor memory that temporarily stores programs executed by the CPU 101 and data used by the CPU 101 for calculation. Meanwhile, the server 100 may include a memory of a type other than the RAM, or may include a plurality of memories.

The HDD 103 is a nonvolatile storage device that stores software programs such as an OS, middleware, and application software, and data. The server 100 may include another type of storage device such as a flash memory or an SSD, or may include a plurality of nonvolatile storage devices.

The FPGAs 104 and 105 are coprocessors used as the offload destination of the function of a virtual switch. The virtual switch has a relay function of relaying a received packet to the virtual machine on the server 100. Further, the virtual switch has an extension function such as a cryptographic process (encryption/decryption) and data compression/decompression for the received packet. The extension function may include a process such as a packet processing and a packet control. For example, the relay function of the virtual switch is offloaded to the FPGA 104, and the FPGA 104 executes a relay process based on the relay function. The extension function of the virtual switch is offloaded to the FPGA 105, and the FPGA 105 executes an extension process based on the extension function. The FPGA 104 is an example of the coprocessor 13 of the first embodiment. The FPGA 105 is an example of the coprocessor 14 of the first embodiment.

The image signal processing unit 106 outputs an image to a display 51 connected to the server 100 according to an instruction from the CPU 101. As for the display 51, a CRT (Cathode Ray Tube) display, a liquid crystal display (LCD), a plasma display, an organic EL (OEL: Organic Electro-Luminescence) display, or any other type of display may be used.

The input signal processing unit 107 acquires an input signal from an input device 52 connected to the server 100 and outputs the acquired input signal to the CPU 101. As for the input device 52, a pointing device such as a mouse, a touch panel, a touch pad or a trackball, a keyboard, a remote controller, a button switch, or the like may be used. A plurality of types of input devices may be connected to the server 100.

The medium reader 108 is a reading device that reads a program and data recorded in a recording medium 53. As for the recording medium 53, for example, a magnetic disk, an optical disc, a magneto-optical disc (MO), a semiconductor memory, or the like may be used. The magnetic disk includes a flexible disk (FD) and an HDD. The optical disc includes a CD (Compact Disc) and a DVD (Digital Versatile Disc).

The medium reader 108 copies the program or data read from, for example, the recording medium 53 to another recording medium such as the RAM 102 or the HDD 103. The read program is executed by, for example, the CPU 101. The recording medium 53 may be a portable recording medium and may be used for distributing the program and data. Further, the recording medium 53 and the HDD 103 may be referred to as a computer-readable recording medium.

The NIC 109 is a physical interface that is connected to the network 50 and communicates with other computers via the network 50. The NIC 109 has a plurality of physical ports coupled to cable connectors and is connected to a communication device such as a switch or a router by a cable.

Meanwhile, the NIC 109 may be a smart NIC having a plurality of coprocessors. In that case, the offload destination of the relay switch may be a plurality of coprocessors on the NIC 109. For example, a configuration may be considered in which the relay function is offloaded to a first coprocessor on the NIC 109 and the extension function is offloaded to a second coprocessor on the NIC 109. Further, the server 200 is implemented by using the same hardware as the server 100.

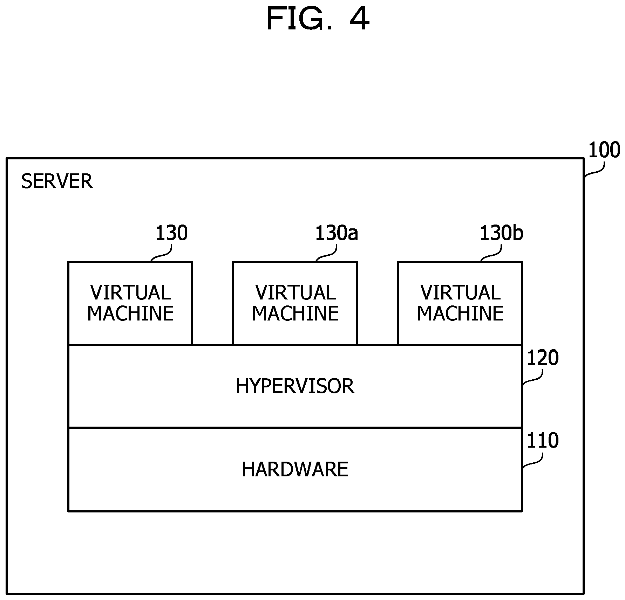

FIG. 4 is a view illustrating an example of a virtualization mechanism. The server 100 includes hardware 110, and the hardware 110 is used to operate a hypervisor 120 and virtual machines 130, 130a, and 130b.

The hardware 110 is a physical resource for data input/output and calculation in the server 100, and includes the CPU 101 and the RAM 102 illustrated in FIG. 3. The hypervisor 120 operates the virtual machines 130, 130a, and 130b on the server 100 by allocating the hardware 110 of the server 100 to the virtual machines 130, 130a, and 130b. The hypervisor 120 has a function of a virtual switch. However, the hypervisor 120 offloads the function of the virtual switch to the FPGAs 104 and 105. Therefore, the hypervisor 120 may execute the control function for the offloaded virtual switch, or may not execute the relay function or extension function of the virtual switch.

The virtual machines 130, 130a, and 130b are virtual computers that operate using the hardware 110. The server 200 also executes the hypervisor and the virtual machine, like the server 100.

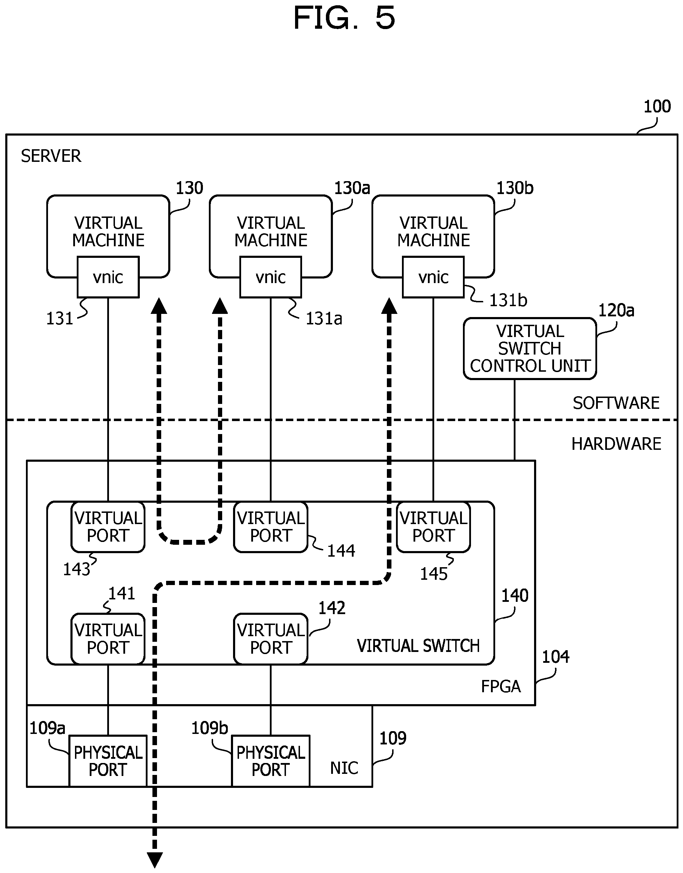

FIG. 5 is a view illustrating an example of offload of a virtual switch. For example, the relay function of a virtual switch 140 is offloaded to the FPGA 104. The virtual switch 140 has virtual ports 141, 142, 143, 144, and 145. The virtual ports 141 to 145 are virtual interfaces connected to physical ports or virtual machines.

The NIC 109 has physical ports 109a and 109b. For example, the physical port 109a is connected to the virtual port 141. The physical port 109b is connected to the virtual port 142.

The virtual machine 130 has a virtual NIC (vnic) 131. The virtual machine 130a has a vnic 131a. The virtual machine 130b has a vnic 131b. The vnics 131, 131a and 131b are virtual interfaces of the virtual machines 130, 130a, and 130b connected to the virtual ports of the virtual switch 140. For example, the vnic 131 is connected to the virtual port 143. The vnic 131a is connected to the virtual port 144. The vnic 131b is connected to the virtual port 145.

For example, the hypervisor 120 includes a virtual switch controller 120a. The virtual switch controller 120a controls the connection between the virtual port and the physical port of the virtual switch 140, the connection between the virtual port and the vnic, and the like.

The virtual machines 130, 130a, and 130b are capable of communicating with each other via the virtual switch 140. For example, the virtual machine 130 communicates with the virtual machine 130a by a communication path via the vnic 131, the virtual ports 143 and 144, and the vnic 131a. Further, the virtual machines 130, 130a, and 130b are also capable of communicating with the virtual machines or other physical machines operating on the server 200. For example, the virtual machine 130b transmits data to the virtual machine or another physical machine operating on the server 200 by a communication path via the vnic 131b, the virtual ports 145 and 141, and the physical port 109a. Further, the virtual machine 130b receives data destined for the virtual machine 130b transmitted by the virtual machine or another physical machine operating in the server 200 by a communication path via the physical port 109a, the virtual ports 141 and 145, and the vnic 131b.

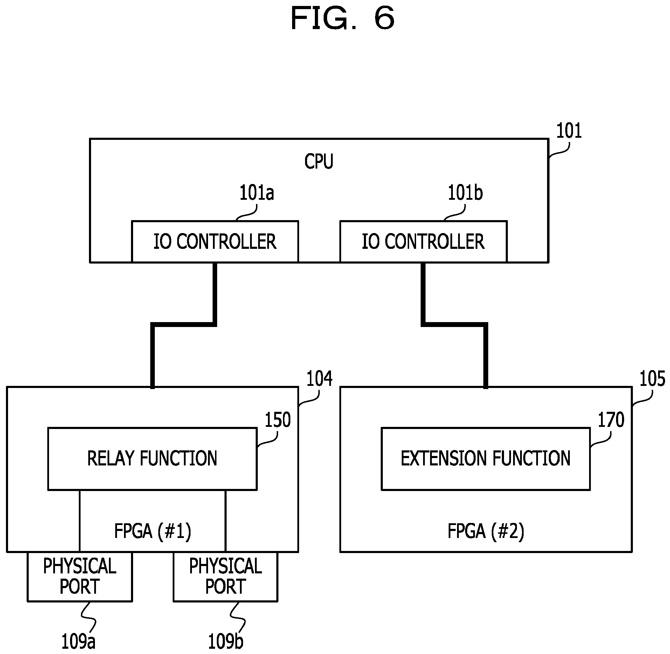

FIG. 6 is a view illustrating an example of offload of the relay function and the extension function. The CPU 101 has IO (Input/Output) controllers 101a and 101b. The FPGA 104 is connected to the IO controller 101a. The FPGA 105 is connected to the IO controller 101b. A communication path between the FPGAs 104 and 105 via the IO controllers 101a and 101b is a portion of the bus 111. A number for identifying the FPGA 104 is referred to as "#1." A number for identifying the FPGA 105 is referred to as "#2."

The virtual switch 140 has a relay function 150 and an extension function 170. The FPGA 104 has the relay function 150 of the virtual switch 140. The relay function 150 is implemented by an electronic circuit in the FPGA 104.

The FPGA 105 has the extension function 170 of the virtual switch 140. The extension function 170 is implemented by an electronic circuit in the FPGA 105. The FPGA 104 uses the relay function 150 to receive/transmit data from/to the outside via the physical ports 109a and 109b.

For example, a single vnic of a certain virtual machine is logically connected to both the virtual port on the FPGA 104 and the virtual port on the FPGA 105 at least for data reception. Alternatively, at least for data reception, it can be said that both the virtual port on the FPGA 104 and the virtual port on the FPGA 105 behave logically as one virtual port for the vnic of the virtual machine, and the one virtual port is connected to the vnic.

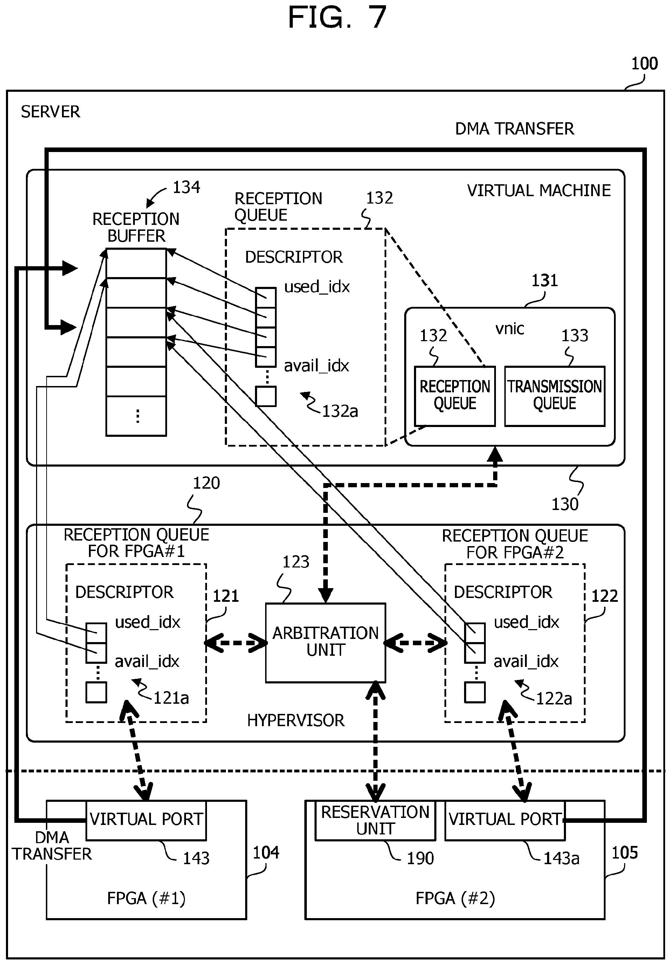

FIG. 7 is a view illustrating an example of the function of a server. The vnic 131 has a reception queue 132 and a transmission queue 133. The virtual machine 130 has a reception buffer 134. The reception buffer 134 is implemented by a storage area on the RAM 102, and received data destined for the virtual machine 130 is written in the reception buffer 134.

The reception queue 132 has a descriptor 132a. The descriptor 132a is information for FIFO control in the reception buffer 134. The descriptor 132a has an index (avail_idx) representing an allocated storage area of the reception buffer 134 and an index (used_idx) on the virtual machine 130 side representing a storage area of the reception buffer 134 in which a data writing is completed. The "avail" is an abbreviation for "available." The "idx" is an abbreviation for "index." The reception buffer 134 is used as a single queue by the virtual machine 130 based on the descriptor 132a.

The transmission queue 133 is a queue for managing data to be transmitted. The hypervisor 120 has reception queues 121 and 122 and an arbitration unit 123. The reception queues 121 and 122 are implemented by using a storage area on the RAM 102.

The reception queue 121 has a descriptor 121a. The descriptor 121a has an index (avail_idx) on the FPGA 104 side, which represents a storage area allocated to the FPGA 104 in the reception buffer 134. The descriptor 121a has an index (used_idx) on the FPGA 104 side, which represents a storage area of the reception buffer 134 in which a data writing is completed by the FPGA 104.

The reception queue 122 has a descriptor 122a. The descriptor 122a has an index (avail_idx) on the FPGA 105 side, which represents a storage area allocated to the FPGA 105 in the reception buffer 134. The descriptor 122a has an index (used_idx) on the FPGA 105 side, which represents a storage area of the reception buffer 134 in which a data writing is completed by the FPGA 105.

The arbitration unit 123 arbitrates data writing into the reception buffer 134 of the virtual machine 130 by the FPGAs 104 and 105. The arbitration unit 123 performs a distribution process of allocating the storage area of the reception buffer 134 to the FPGAs 104 and 105 by updating the index "avail_idx" of each of the descriptors 121a and 122a based on the index "avail_idx" in the descriptor 132a. In addition, the arbitration unit 123 performs an arbitration process of updating the index "used_idx" of the descriptor 132a in response to the update of the index "used_idx" of the descriptor 121a by the FPGA 104 or the update of the index "used_idx" of the descriptor 122a by the FPGA 105.

The virtual machine 130 specifies a storage area of the reception buffer 134 in which a data writing is completed, based on the index "used_idx" of the descriptor 132a, and processes the data written in the storage area. The virtual machine 130 releases the storage area corresponding to the processed data.

The virtual port 143 acquires an index of the write destination storage area in the reception buffer 134 from the arbitration unit 123, and transfers the data to the storage area by DMA (Direct Memory Access). The virtual port 143 updates the index "used_idx" of the descriptor 121a according to the writing (DMA transfer) into the reception buffer 134.

The FPGA 105 includes a virtual port 143a and a reservation unit 190. The virtual port 143a acquires an index of the write destination storage area in the reception buffer 134 from the arbitration unit 123, and transfers the data to the storage area by DMA. The virtual port 143a updates the index "used_idx" of the descriptor 122a according to the writing (DMA transfer) into the reception buffer 134.

When new data to be applied an extension function is received from the FPGA 104, the reservation unit 190 reserves a storage area of the reception buffer 134 for the arbitration unit 123. Specifically, the reservation unit 190 outputs an allocation request including a request size according to the size of received data, to the arbitration unit 123. As a result, the storage area of the reception buffer 134 is allocated to the FPGA 105 via the arbitration unit 123, and a direct writing into the reception buffer 134 by the virtual port 143a becomes possible. The virtual machines 130a and 130b also have the same functions as the virtual machine 130.

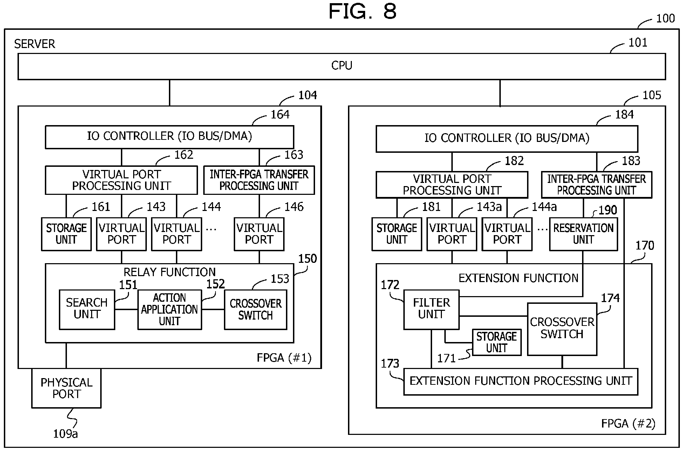

FIG. 8 is a view illustrating an example of the function of the server (continued). The FPGA 104 includes the virtual ports 143, 144, 146,..., the relay function 150, a storage unit 161, a virtual port processing unit 162, an inter-FPGA transfer processing unit 163, and an IO controller 164. In FIG. 8, the virtual ports 141, 142 and 145 are not illustrated. The virtual port 146 is a virtual port used for data transfer to the FPGA 105.

The relay function 150 relays data which is received from the outside via the physical port 109a, to the destination virtual machine. The relay function 150 has a search unit 151, an action application unit 152, and a crossbar switch 153. The data is received in units called packets. The term "packet" is sometimes used when describing a process on a packet-by-packet basis.

The search unit 151 searches for a received packet based on a preset rule and determines an action corresponding to the received packet. The rule includes an action to be executed for, for example, an input port number and header information. The action includes, for example, rewriting of the header information, in addition to determination of an output virtual port for the destination virtual machine.

The action application unit 152 applies the action searched by the search unit 151 to the received packet and outputs a result of the application to the crossbar switch 153. Here, when an extension process such as a cryptographic process or compression/decompression is applied as an action, the action is executed by the FPGA 105. The action application unit 152 notifies the FPGA 105 of a result of the relay process, for example, by adding metadata indicating an output destination virtual port number to the received packet. In this case, a virtual port number connected to a certain virtual machine in the FPGA 104 and a virtual port number connected to the same virtual machine in the FPGA 105 may be the same number. Alternatively, the FPGA 104 may acquire and hold in advance the virtual port number connected to the virtual machine in the FPGA 105, and may notify the FPGA 105 of the virtual port number with it added to the received data as metadata.

The crossbar switch 153 outputs the received packet acquired from the action application unit 152 to the output destination virtual port. Here, the crossbar switch 153 outputs the received packet to be applied an extension function to the virtual port 146.

The storage unit 161 stores DMA memory information. The DMA memory information is information for identifying the reception buffer of the DMA transfer destination corresponding to the virtual port. The DMA memory information may include information on a data writable index in the reception buffer.

The virtual port processing unit 162 uses the DMA memory information corresponding to the virtual port to access a memory area of the virtual machine via the IO controller 164 to transmit and receive data (*e.g.*, write the received data into the reception buffer).

The inter-FPGA transfer processing unit 163 transmits the received packet output to the virtual port 146 by the crossbar switch 153 to the FPGA 105 via the IO controller 164.

The IO controller 164 controls the bus 111 and DMA transfer in the server 100. The IO controller 164 may include an IO bus controller that controls data transfer via the bus 111 and a DMA controller that controls DMA transfer.

The FPGA 105 has virtual ports 143a, 144a,..., an extension function 170, a storage unit 181, a virtual port processing unit 182, an inter-FPGA transfer processing unit 183, an IO controller 184, and a reservation unit 190.

The virtual ports 143a and 144a are virtual ports connected to virtual machines on the server 100. The virtual port 143a is connected to the virtual machine 130. The virtual port 144a is connected to the virtual machine 130a.

The extension function 170 performs an extension process on the extension process target data received from the FPGA 104, and transfers the processed data to the destination virtual machine. The extension function 170 has a storage unit 171, a filter unit 172, an extension function processing unit 173, and a crossbar switch 174.

The storage unit 171 stores a filter rule. The filter rule is information indicating the output destination virtual port for packet header information. The filter unit 172 acquires the received data that has been transferred by the FPGA 104 via the reservation unit 190. The filter unit 172 specifies the output destination virtual port of the data received from the FPGA 104 based on the filter rule stored in the storage unit 171, and supplies the specified output destination virtual port to the crossbar switch 174.

The extension function processing unit 173 acquires the received data that has been transferred by the FPGA 104, from the inter-FPGA transfer processing unit 183. The extension function processing unit 173 performs an extension process such as a cryptographic process (*e.g.*, decryption) or decompression from a compressed state on the received data, and supplies the processed data to the crossbar switch 174.

The crossbar switch 174 outputs the processed data that has been supplied from the extension function processing unit 173, to the output destination virtual port supplied from the filter unit 172.

The storage unit 181 stores DMA memory information. As described above, the DMA memory information is information for identifying a reception buffer of the DMA transfer destination corresponding to a virtual port.

The virtual port processing unit 182 uses the DMA memory information corresponding to the virtual port to access a memory area of the virtual machine via the IO controller 184, and transmits and receives data (*e.g.*, write the received data into the reception buffer).

The inter-FPGA transfer processing unit 183 receives the received packet that has been transferred by the FPGA 104, via the IO controller 164 and outputs the received packet to the extension function processing unit 173 and the reservation unit 190.

The IO controller 184 controls the bus 111 and DMA transfer in the server 100. The IO controller 184 may include an IO bus controller that controls data transfer via the bus 111, and a DMA controller that controls DMA transfer.

The reservation unit 190 counts the number of packets for each destination virtual port for the data received by the inter-FPGA transfer processing unit 183 or the packets input from the virtual port and hit by the filter unit 172, and obtains the number of areas in the reception buffer required for each virtual port. The reservation unit 190 notifies the arbitration unit 123 of the number of areas of the reception buffer required for each virtual port of the FPGA 105 at regular cycles. Here, the process of the extension function processing unit 173 takes time. Therefore, the reservation unit 190 requests the arbitration unit 123 for the number of buffer areas required for writing at a timing when the data is input to the FPGA 104, so that a storage area of the reception buffer required for output to the virtual port may be ready at the time of completion of the extension process (completed for allocation).

Meanwhile, the number of virtual ports and the number of physical ports illustrated in FIG. 8 are examples, and may be other numbers.

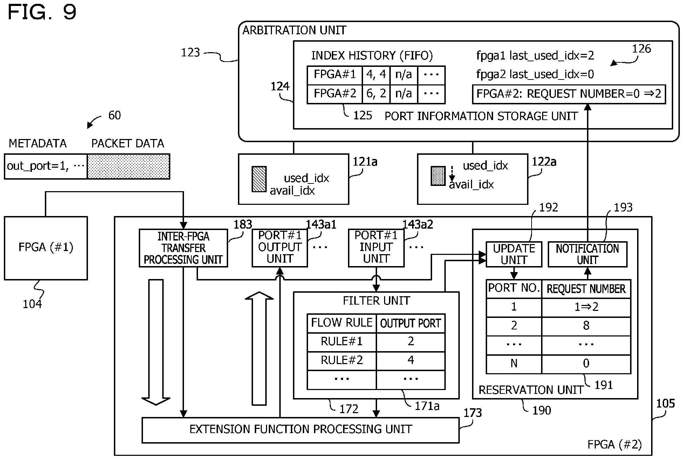

FIG. 9 is a view illustrating an example of the process of the reservation unit. Received data 60 to be applied an extension function that is transferred from the FPGA 104 to the FPGA 105 includes metadata and packet data. As described above, the metadata includes an output destination virtual port number (*e.g.*, out_port=1) corresponding to the destination virtual machine. The packet data is a portion corresponding to a packet including header information and user data body of various layers.

When the received data 60 is received from the FPGA 104 via the bus 111 of the server 100, the inter-FPGA transfer processing unit 183 outputs the received data 60 to the reservation unit 190 and the extension function processing unit 173.

The extension function processing unit 173 starts an extension process for the user data body of the received data 60. Here, the reservation unit 190 includes a request number counter 191, an update unit 192, and a notification unit 193.

The request number counter 191 is information for managing the number of storage areas of the reception buffer required for each virtual machine for each virtual port number.

The update unit 192 counts the number of storage areas required for the output destination virtual port from the metadata of the received data 60, and updates the request number counter 191.

The notification unit 193 refers to the request number counter 191 at regular cycles to notify the arbitration unit 123 of an allocation request including the number of storage areas (*e.g.*, a request size) required for the reception buffer of the virtual machine connected to the virtual port.

When the extension process for the received data 60 is completed, the extension function processing unit 173 supplies the processed data to, for example, a port #1 output unit 143a1 corresponding to the virtual port 143a of the output destination via the crossbar switch 174 (not illustrated). In addition, in the extension process, for example, the metadata added to the received data 60 is removed.

Here, for the data received from the FPGA 104, the update unit 192 may specify the output destination virtual port corresponding to a flow rule from the header information (flow rule) of the data. For example, when the storage unit 171 maintains the filter rule 171a, the update unit 192 may acquire a virtual port number (output port) specified by the filter unit 172 for the flow rule, and may update the request number counter 191. For example, when the filter unit 172 acquires transmission data via a port #1 input unit 143a2 corresponding to the virtual port 143a that is an input source of transmission target data, the filter unit 172 identifies the output destination of data, which is destined for a transmission source address of the transmission data, as the virtual port 143a. The filter unit 172 records a result of the identification in the filter rule 171a and holds it in the storage unit 171.

When the allocation request is received from the notification unit 193, the arbitration unit 123 allocates the storage area of the reception buffer of the relevant virtual machine to the FPGA 105. The arbitration unit 123 manages the allocation of reception buffers to the FPGAs 104 and 105 based on the information stored in a port information storage unit 124.

Here, FIG. 9 illustrates an example of allocation management for the reception buffer 134 of the virtual machine 130. Other virtual machines may be managed similarly to the virtual machine 130.

The port information storage unit 124 is implemented by using a predetermined storage area of the RAM 102. The port information storage unit 124 has an index history 125 and index management information 126.

The index history 125 records an index of the end of the allocated descriptor 132a and an index of the end of the descriptor 121a or the descriptor 122a when the receive buffers are respectively allocated to the FPGAs 104 and 105. The index history 125 is a queue and is processed by the FIFO.

From a comparison between indexes on the descriptor 132a side of the head data of the FPGAs 104 and 105 recorded in the index history 125, it is possible to determine which FPGA data should be processed first (the smaller index is processed first). Further, the buffer allocation boundary of the data of the FPGA to be processed may be determined using the index on the descriptor 121a side or the descriptor 122a side recorded in the index history 125. When a data writing for the FPGA to be processed is completed up to the buffer allocation boundary, by deleting the head data of the FPGA in the index history 125, the data of the FPGA to be processed may be switched. Meanwhile, "n/a" in the index history 125 is an abbreviation for "not available" and indicates that there is no data.

The index management information 126 includes information of "fpga1 last_used_idx," "fpga2 last_used_idx," and a request number of storage areas of the FPGA 105 (FPGA#2).

The "fpga1 last_used_idx" indicates an index of the end of a storage area in which a data writing is completed by the FPGA 104, in the reception buffer 134. The "fpga2 last_used_idx" indicates an index of the end of a storage area in which a data writing is completed by the FPGA 105, in the reception buffer 134.

The request number indicates the number of storage areas requested for allocation to the FPGA 105. For example, the request number=1 corresponds to one storage area corresponding to one index. It can be said that the request number=1 indicates the size of the storage area.

For example, it is assumed that the reservation unit 190 acquires the received data 60 and updates the request number of the virtual port 143 (port number=1) in the request number counter 191 from 1 to 2. The notification unit 193 notifies the arbitration unit 123 of an allocation request indicating the request number=2 for the reception buffer 134 of the virtual machine 130 connected to the virtual port 143 at the next allocation request notification timing. After notifying the allocation request, the reservation unit 190 may reset the request number completed with a notification of the request number counter 191 to zero.

Then, the arbitration unit 123 allocates the storage area of the reception buffer 134 to the FPGA 105 in response to the allocation request. Here, it is assumed that "4, 4" has been registered for the FPGA 104 in the index history 125 at the time of notification of the allocation request. This indicates that the storage area of 0≤i<4 (i indicates an index) of the reception buffer 134 has been allocated to the FPGA 104. In addition, it is assumed that in the descriptor 121a, avail_idx=4 and used_idx=2, and in the descriptor 122a, avail_idx=0 and used_idx=0. Further, it is assumed that in the index management information 126, fpga1 last_used_idx=2, fpga2 last_used_idx=0, and the request number=0.

The arbitration unit 123 adds the request number "2" requested by the allocation request to the request number in the index management information 126. As a result, the request number in the index management information 126 is updated to 0+2=2. The arbitration unit 123 updates the index avail_idx of the descriptor 122a from 0 to 2 based on the request number "2" in the index management information 126. In addition, the arbitration unit 123 records "6, 2" for the FPGA 105 in the index history 125. When the storage area is allocated to the FPGA 105, the arbitration unit 123 subtracts the number of allocated storage areas from the request number in the index management information 126.

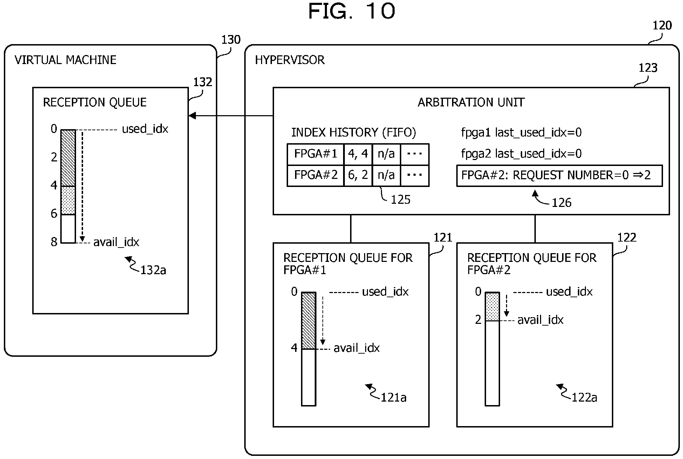

FIG. 10 is a view illustrating an example of a distribution process by the arbitration unit. The distribution process is a process of allocating storage areas divided by an index in the reception buffer 134 to the FPGAs 104 and 105. For example, the arbitration unit 123 performs the distribution process for the virtual machine 130 as follows (the same process is performed for other virtual machines).

In the initial state, the reception buffer 134 is not secured and index information is not set in the index history 125. In addition, all parameters of the index management information 126 and the descriptors 121a, 122a and 132a are 0.

First, when the virtual machine 130 starts, the virtual machine 130 secures a storage area of the reception buffer 134 on the RAM 102 and allocates the reception buffer 134 to the reception queue 132 (initialization of the reception buffer 134 and the reception queue 132). For example, the size of the reception buffer 134 is predetermined. Here, as an example, the size of the reception buffer 134 after initialization is set to 8. At this time, the leading index of the reception buffer 134 is 0. The end index of the reception buffer 134 is 8. The storage area of 0≤i<8 of the reception buffer 134 is in an unallocated state. The virtual machine 130 updates the index "avail_idx" to 8 and the index "used_idx" to 0 in the descriptor 132a of the reception queue 132.

Then, the arbitration unit 123 detects the allocation of the reception buffer 134 by the update of the index "avail_idx" in the reception queue 132. Then, the arbitration unit 123 sets, in the reception queue 121 for the FPGA 104 in charge of the relay function, for example, half of the total number of storage areas of the reception buffer 134 set by the virtual machine 130 (in this example, 8÷2=4). That is, the arbitration unit 123 updates the index "avail_idx" to 4 in the descriptor 121a. The arbitration unit 123 sets a set (4, 4) of the end index=4 on the descriptor 132a allocated to the FPGA 104 and the index avail_idx=4 of the descriptor 121a in the column of the head of the FPGA 104 (FPGA#1) of the index history 125. However, the arbitration unit 123 may set the number of storage areas allocated to the FPGA 104 to another number.

The arbitration unit 123 executes the following process when there is an allocation request of the reception buffer 134 from the FPGA 105. The arbitration unit 123 sets, in the FPGA 105, storage areas corresponding to the request number from the beginning (index=4 in this example) of an unallocated area of the reception buffer 134. For example, when the request number=2, the arbitration unit 123 updates the request number in the index management information 126 from 0 to 2. Then, the arbitration unit 123 updates the index "avail_idx" to 2 in the descriptor 122a. The arbitration unit 123 sets a set (6, 2) of the end index=6 on the descriptor 132a allocated to the FPGA 105 and the index avail_idx=2 of the descriptor 122a in the head of the column of the FPGA 105 (FPGA#2) of the index history 125. The arbitration unit 123 subtracts the number of storage areas allocated this time from the request number of the index management information 126. For example, since the arbitration unit 123 has allocated two storage areas to the FPGA 105 this time, the arbitration unit 123 updates the request number to 2-2=0.

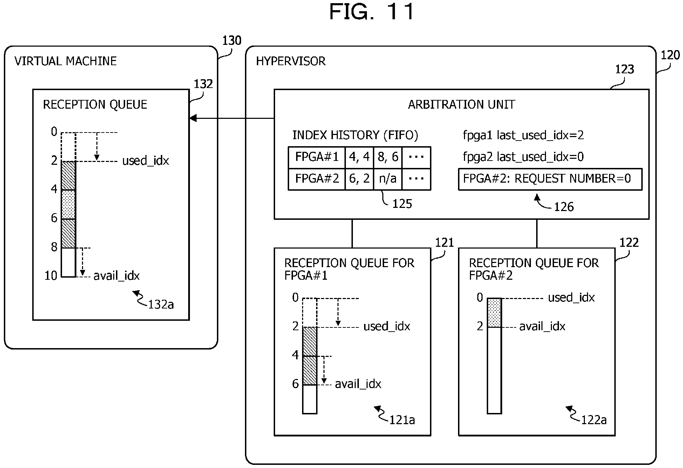

FIG. 11 is a view illustrating an example of a distribution process by the arbitration unit (continued). Subsequently, the FPGA 104 writes data in the storage area of the reception buffer 134 corresponding to the index "avail_idx" in order from the smaller "avail_idx" allocated to the descriptor 121a of the reception queue 121. For example, it is assumed that the FPGA 104 writes data in the storage area of 0≤i<2 of the reception buffer 134. Then, the FPGA 104 updates the index "used_idx" of the descriptor 121a from 0 to 2.

The arbitration unit 123 updates the index "fpga1 last_used_idx" from 0 to 2 and the index "used_idx" in the descriptor 132a of the reception queue 132 from 0 to 2 according to an arbitration process to be described later.

The virtual machine 130 detects that data is written in the storage area corresponding to $0 \leq i < 2$ starting from the head index (0 in this case) of the reception buffer 134 by the index used_idx=2 in the descriptor 132a, and processes the data. When the process for the data is completed, the virtual machine 130 releases the storage area corresponding to $0 \leq i < 2$ of the reception buffer 134. When the storage area of the reception buffer 134 is released, the virtual machine 130 replenishes the reception buffer 134 with the released storage area. As a result, for the reception buffer 134, the head index of the descriptor 132a becomes 2 and the end index thereof becomes 10. Further, the index "avail_idx" of the descriptor 132a is updated from 8 to 10.

When the arbitration unit 123 detects the update of the index "avail_idx" of the descriptor 132a, the arbitration unit 123 detects the release of the storage area corresponding to the FPGA 104 having the smaller allocation end index in the descriptor 132a in the index history 125. Then, until the number of storage areas of the reception buffer 134 reaches half of the total number (4 in this example), the arbitration unit 123 additionally allocates the storage areas of the reception buffer 134 to the FPGA 104 (in this case, the number of additional allocations is 2). The arbitration unit 123 updates the index "avail_idx" to 6 (=4+2) in the descriptor 121a. The arbitration unit 123 sets a set (8, 6) of the end index=6+2=8 on the descriptor 132a allocated to the FPGA 104 and the index avail_idx=6 of the descriptor 121a in the second column of the FPGA 104 (FPGA#1) of the index history 125.

In this way, the arbitration unit 123 allocates the storage area of the reception buffer 134 to each of the FPGAs 104 and 105.

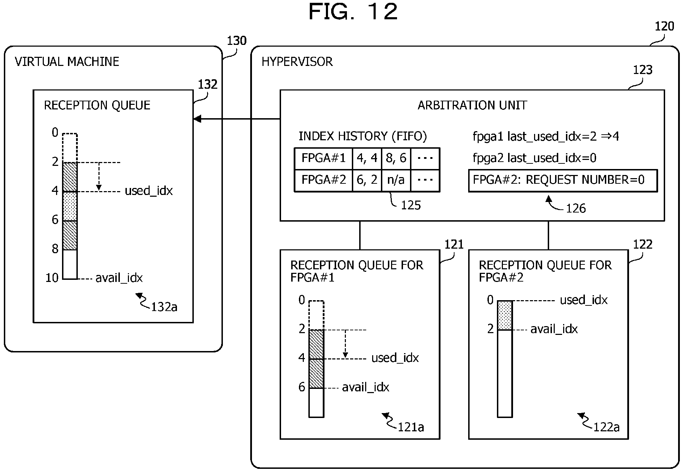

FIG. 12 is a view illustrating an example of arbitration process by the arbitration unit. The arbitration process is a process of updating the index "used_idx" of the descriptor 132a in accordance with the update of the index "used_idx" of the descriptor 121a by the FPGA 104 or the update of the index "used_idx" of the descriptor 122a by the FPGA 105. Although the process following the state of FIG. 11 will be described below, the same process as described below is also performed when the index "used_idx" of the descriptor 121a in FIG. 11 is updated from 0 to 2.

The FPGA 104 writes data in the storage area of the reception buffer 134 corresponding to the index "avail_idx" in the ascending order of the index "avail_idx" allocated by the descriptor 121a of the reception queue 121.

Here, for example, the arbitration unit 123 calculates the head index of the area allocated to the FPGA 104 in the reception buffer 134 from the head data of the FPGA 104 of the index history 125 and the index "fpga1 last_used_idx" of the index management information 126. When the head data of the FPGA 104 of the index history 125 is (4, 4) and the index fpga1 last_used_idx=2, the head index of the area allocated to the FPGA 104 in the reception buffer 134 is 2 (=4-(4-2)). Then, the arbitration unit 123 instructs the FPGA 104 to write data from the storage area in the reception buffer 134 corresponding to the head index allocated to the FPGA 104. The writable size may be insufficient only with the storage area indicated by the head data of the FPGA 104 of the index history 125. In this case, the arbitration unit 123 uses the second data of the FPGA 104 of the index history 125 to specify the writable storage area of the reception buffer 134.

For example, it is assumed that the FPGA 104 writes data in the storage area of $2 \leq i < 4$ of the reception buffer 134. Then, the FPGA 104 updates the index "used_idx" of the descriptor 121a from 2 to 4.

The arbitration unit 123 compares the indexes (4 and 6 in the example of FIG. 12) on the descriptor 132a side in the head data of each of the FPGAs 104 and 105 of the index history 125 and select the FPGA (FPGA 104) corresponding to the smaller index.

With respect to the selected FPGA, the arbitration unit 123 sets the index of the descriptor on the FPGA side of the index history 125 to H, and obtains the count by the following expression (1).

$$count = MIN\ (used\_idx,\ H) - last\_used\_idx... (1)$$

Where, MIN is a function that takes the minimum value of the arguments. The index "used_idx" in the expression (1) is an index "used_idx" of the descriptor (descriptor 121a or descriptor 122a) on the selected FPGA side. The index "last_used_idx" in the expression (1) is a value corresponding to the selected FPGA in the index management information 126.

When the count$\geq$1, the arbitration unit 123 adds the count to each of the index "used_idx" of the descriptor 132a and the index "last_used_idx" corresponding to the FPGA.

Then, when the index "last_used_idx" becomes equal to H for the FPGA, the arbitration unit 123 deletes the head data of the FPGA from the index history 125.

In the example of FIG. 12, the FPGA 104 is selected from the index history 125. Then, count=MIN (4, 4)-2=4-2=2. Therefore, the arbitration unit 123 updates the index "used_idx" in the descriptor 132a to 2+count (=4). Further, the arbitration unit 123 updates the index fpga1 last_used_idx in the index management information 126 to 2+count (=2+2=4). Here, since the index fpga1 last_used_idx=4 becomes equal to H=4, the arbitration unit 123 deletes the head data (4, 4) of the FPGA 104 of the index history 125. Then, in the index history 125, (8, 6) becomes the head data for the FPGA 104.

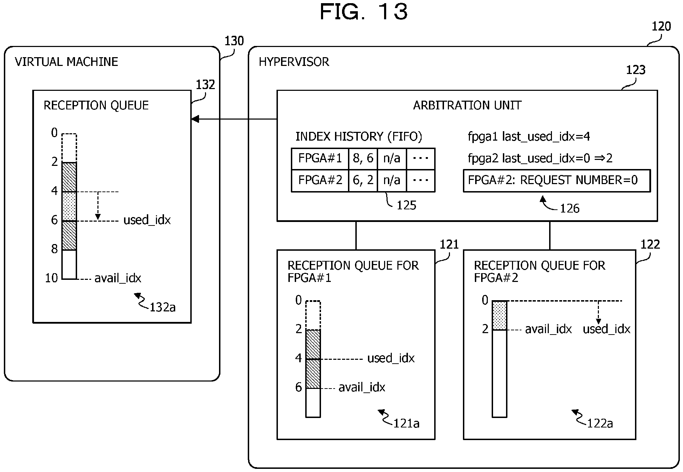

FIG. 13 is a view illustrating an example (continuation) of arbitration process by the arbitration unit. Subsequently, the FPGA 105 writes data in the storage area of the reception buffer 134 corresponding to the index "avail_idx" in the ascending order of the index avail_idx allocated by the descriptor 122a of the reception queue 122.

Here, for example, the arbitration unit 123 calculates the head index of the area allocated to the FPGA 105 in the reception buffer 134 from the head data of the FPGA 105 of the index history 125 and the index fpga2 last_used_idx of the index management information 126. When the head data of the FPGA 105 of the index history 125 is (6, 2) and the index fpga2 last_used_idx=0, the head index of the area allocated to the FPGA 105 in the reception buffer 134 is 4 (=6 -(2-0)). Then, the arbitration unit 123 instructs the FPGA 105 to write data from the storage area in the reception buffer 134 corresponding to the head index allocated to the FPGA 105. The writable size may be insufficient only with the storage area indicated by the head data of the FPGA 105 of the index history 125. In this case, the arbitration unit 123 uses the second data of the FPGA 105 of the index history 125 to specify the writable storage area of the reception buffer 134.

For example, it is assumed that the FPGA 105 writes data in the storage area of $4 \leq i < 6$ of the reception buffer 134. Then, the FPGA 105 updates the index "used_idx" of the descriptor 122a from 0 to 2.

The arbitration unit 123 compares the indexes (8 and 6 in the example of FIG. 13) on the descriptor 132a side in the head data of each of the FPGAs 104 and 105 of the index history 125 and select the FPGA (FPGA 104) corresponding to the smaller index.

The arbitration unit 123 obtains the count for the selected FPGA by the expression (1). In this example, count=MIN(2,2)-0=2. Since the count=$2 \geq 1$, the arbitration unit 123 updates the index "used_idx" of the descriptor 132a to 4+count=4+2=6. Further, the arbitration unit 123 updates the index "fpga2 last_used_idx" in the index management information 126 to 0+count=0+2=2. Here, since the index fpga2 last_used_idx=2 becomes equal to H=2, the arbitration unit 123 deletes the head data (6, 2) of the FPGA 105 of the index history 125. In this way, the arbitration unit 123 performs the arbitration process.

Next, the processing procedure of the server 100 will be described. In the following, a case where data destined for the virtual machine 130 is received is illustrated, but the same procedure may be performed when data destined for another virtual machine is received. First, the processing procedure of the FPGAs 104 and 105 will be described.

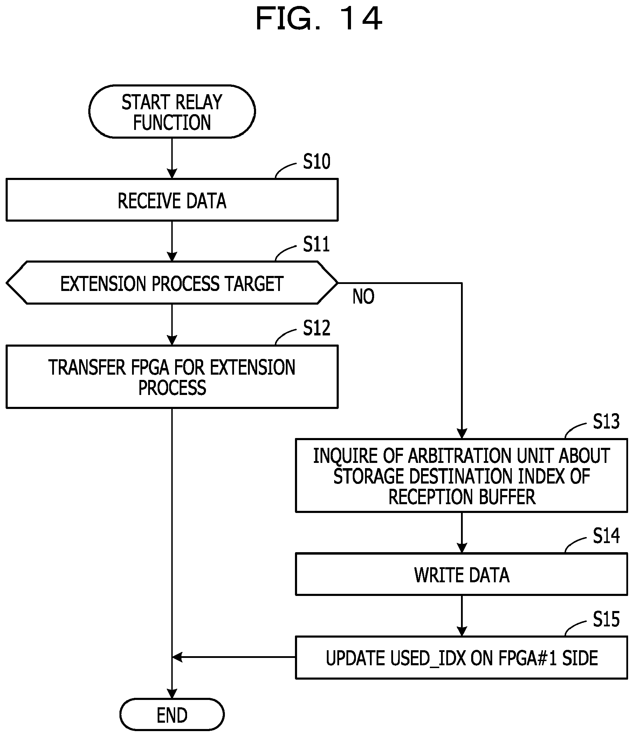

FIG. 14 is a flowchart illustrating an example of process of the FPGA for relay function.

(S10) The FPGA 104 receives data via the physical port 109a.

(S11) The FPGA 104 determines whether or not the received data is the extension process target. When it is determined that the received data is the extension process target, the process proceeds to operation S12. When it is determined that the received data is not the extension process target, the process proceeds to operation S13. For example, the FPGA 104 determines whether or not the received data is the extension process target by specifying an action predetermined by a rule for the header information based on the header information of the received data, etc.

(S12) The FPGA 104 adds a destination virtual port number acquired as a result of the relay process to the received data, and transfers the data after the addition to the FPGA 105 for extension process. Then, the process of the FPGA for relay function ends.

(S13) The FPGA 104 inquires of the arbitration unit 123 about the storage destination index of the reception buffer 134. The FPGA 104 acquires the storage destination index of the reception buffer 134 from the arbitration unit 123.

(S14) The FPGA 104 writes the received data in the storage area corresponding to the storage destination index of the reception buffer 134 (DMA transfer).

(S15) The FPGA 104 updates the index "used_idx" on the FPGA 104 (FPGA#1) side. That is, the FPGA 104 adds the number of storage areas in which data is written (the number of indexes corresponding to the storage areas) to the index "used_idx" of the descriptor 121a. Then, the process of the FPGA for relay function ends.

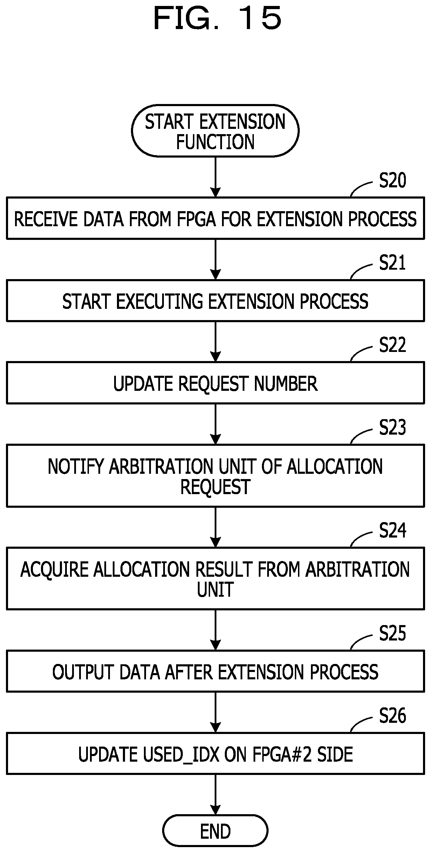

FIG. 15 is a flowchart illustrating an example of process of FPGA for extension function.

(S20) The FPGA 105 receives data of the extension process target from the FPGA for relay function (*e.g.*, the FPGA 104).

(S21) The FPGA 105 starts executing the extension process. The FPGA 105 may perform the extension process started in operation S21, and the following operations S22 to S24 in parallel.

(S22) The FPGA 105 obtains the write size of the data after the extension process according to the size of the data received in operation S20, and obtains a request number of the storage areas of the reception buffer 134 based on the write size. The FPGA 105 updates the request number of the storage areas of the reception buffer 134 corresponding to the virtual port 143a that is the output destination of the data after the extension process. The request number for each virtual port is registered in the request number counter 191 as described above.

(S23) The FPGA 105 notifies the arbitration unit 123 of an allocation request of the storage area of the reception buffer 134, which includes the request number obtained in operation S22.

(S24) The FPGA 105 acquires a result of the allocation of the storage area of the reception buffer 134 from the arbitration unit 123.

(S25) When the extension process is completed, the FPGA 105 outputs the data after the extension process to the storage area of the reception buffer 134 allocated to the FPGA 105 (DMA transfer).

(S26) The FPGA 105 updates the index "used_idx" on the FPGA 105 (FPGA#2) side. That is, the FPGA 105 adds the number of storage areas in which data is written (the number of indexes corresponding to the storage areas) to the index "used_idx" of the descriptor 122a. Then, the process of the FPGA for extension function ends.

Next, the processing procedure of the arbitration unit 123 will be described. In the following, a virtual machine may be abbreviated as VM in the drawings.

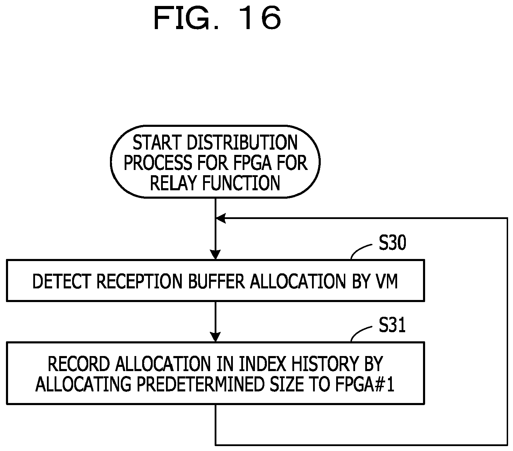

FIG. 16 is a flowchart illustrating an example of distribution process for the FPGA for relay function.

(S30) The arbitration unit 123 detects allocation of the reception buffer 134 by the virtual machine (VM) 130. For example, as described above, the arbitration unit 123 detects the allocation of the reception buffer 134 by the virtual machine 130 by detecting that the index "avail_idx" of the descriptor 132a is updated after the virtual machine 130 is activated.

(S31) The arbitration unit 123 allocates a predetermined size of the reception buffer 134 to the FPGA 104 (FPGA#1). That is, the arbitration unit 123 updates the index "avail_idx" in the descriptor 121a of the reception queue 121 corresponding to the FPGA 104 according to the allocation. The predetermined size is, for example, half of the total size of the reception buffer 134 (the predetermined size may be another value). In the index history 125, the arbitration unit 123 records, in the FPGA 104, a set of the end index of the currently allocated storage area of the descriptor 132a and the index "avail_idx" of the descriptor 121a. Then, the process proceeds to operation S30.

Meanwhile, in operation S30, even when a portion of the reception buffer 134 is released, a new area is allocated to the area released by the virtual machine 130. In a case where the size of the allocation area to the FPGA 104 has not reached a predetermined size when the new area is allocated by the virtual machine 130, in operation S31, the arbitration unit 123 allocates an additional storage area to the FPGA 104 until the size of the allocation area becomes the predetermined size. The arbitration unit 123 updates the index "avail_idx" in the descriptor 121a according to the allocation. In the index history 125, the arbitration unit 123 records, in the FPGA 104, a set of the end index in the descriptor 132a, which corresponds to the currently allocated storage area, and the index "avail_idx" of the descriptor 121a.

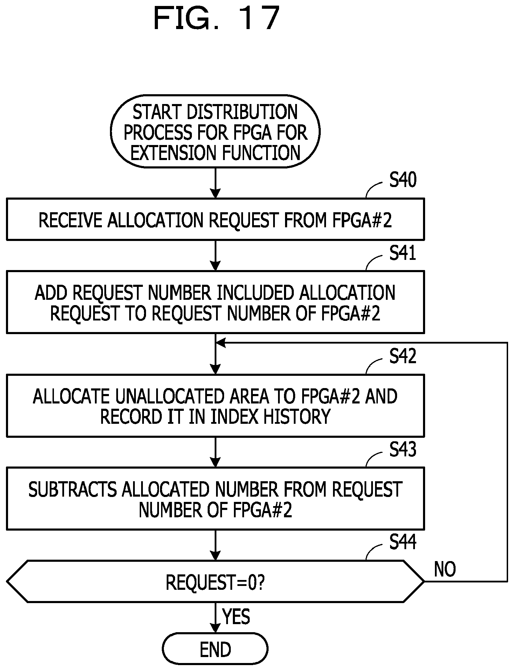

FIG. 17 is a flowchart illustrating an example of distribution process for the FPGA for extension function.

(S40) The arbitration unit 123 receives an allocation request of the storage area of the reception buffer 134 from the FPGA 105 (FPGA#2).

(S41) The arbitration unit 123 adds a request number included in the allocation request to the request number of the FPGA 105 (FPGA#2) in the index management information 126.

(S42) The arbitration unit 123 sequentially allocates the unallocated area of the reception buffer 134 to the FPGA 105 (FPGA#2) from the head of the reception buffer 134. The arbitration unit 123 updates only the storage area to which the index "avail_idx" of the descriptor 122a of the reception queue 122 corresponding to the FPGA 105 is allocated. In the index history 125, the arbitration unit 123 records, in the FPGA 105, a set of the end index in the descriptor 132a, which corresponds to the currently allocated storage area, and the index "avail_idx" of the descriptor 122a.

(S43) The arbitration unit 123 subtracts the allocated number which has been allocated in operation S42 from the request number of the FPGA 105 (FPGA#2) in the index management information 126.

(S44) The arbitration unit 123 determines whether the request number in the index management information 126 is 0 or not. When it is determined that the request number$\neq$0, the process proceeds to operation S42. When it is determined that the request number=0, the distribution process for the FPGA for extension function ends.

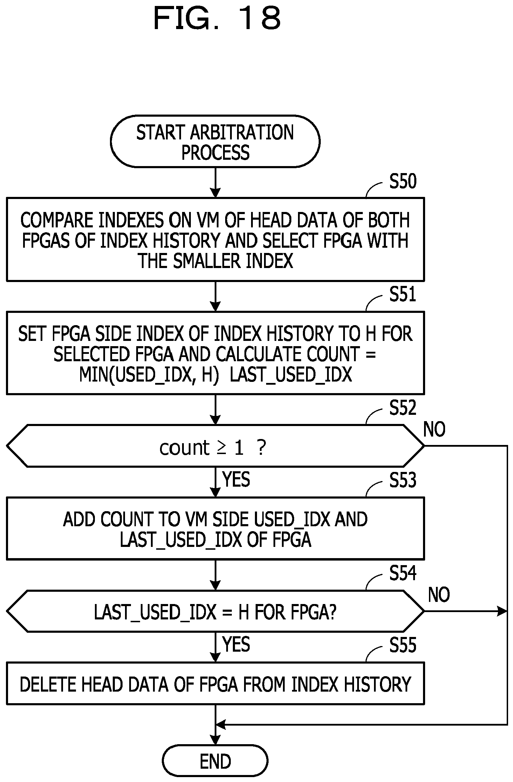

FIG. 18 is a flowchart illustrating an example of arbitration process. The arbitration unit 123 executes the following procedure, for example, when the index "used_idx" of the descriptor 121a or the index "used_idx" of the descriptor 122a is updated, or at a predetermined cycle.

(S50) The arbitration unit 123 compares indexes on the virtual machine (VM) 130 of the head data of both FPGAs of the index history 125, and selects the FPGA with the smaller index. Here, the virtual machine 130 side index indicates the end index of the allocated area for each FPGA in the descriptor 132a.

(S51) The arbitration unit 123 calculates the count according to the expression (1) with the FPGA side index of the head data of the index history 125 set to H for the FPGA selected in operation S50.

(S52) The arbitration unit 123 determines whether or not count$\geq$1. When it is determined that count$\geq$1, the process proceeds to operation S53. When it is determined that count< 1, the arbitration process ends.

(S53) The arbitration unit 123 adds the count to each of the virtual machine 130 side "used_idx" (the index "used_idx" in the descriptor 132a) and the index "last_used_idx" of the FPGA in the index management information 126.

(S54) The arbitration unit 123 determines whether or not the index last_used_idx=H for the FPGA. When it is determined that the index last_used_idx=H, the process proceeds to operation S55. When it is determined that the index last_used_idx$\neq$H, the arbitration process ends.

(S55) The arbitration unit 123 deletes the head data of the FPGA from the index history 125. Then, the arbitration process ends.

In this way, the arbitration unit 123 detects writing of data in the reception buffer 134 by the FPGA 104 or writing of data after the extension process in the reception buffer 134 by the FPGA 105. Then, the arbitration unit 123 notifies the virtual machine 130 of the storage area in which a data writing is completed, by updating the information (the index "used_idx" of the descriptor 132a) referred to by the virtual machine 130 and indicating the storage area in which a data writing is completed in the reception buffer 134. The descriptor 132a is existing information referred to by the virtual machine 130. By the arbitration process of the arbitration unit 123, it is possible to write data in the reception buffer 134 from both the FPGAs 104 and 105 without affecting the process of the virtual machine 130.

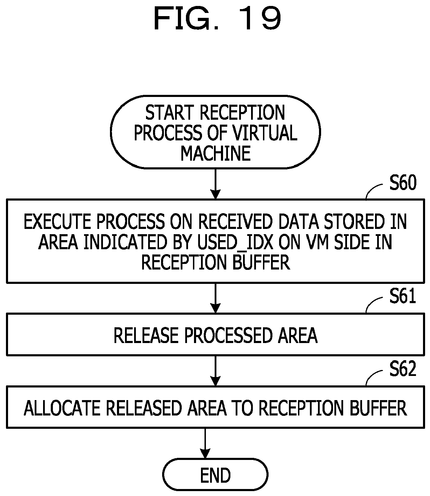

Next, a reception process by the virtual machine 130 will be described. Other virtual machines perform the same procedure. FIG. 19 is a flowchart illustrating an example of reception process of the virtual machine.

(S60) The virtual machine 130 executes a predetermined process on the received data stored in a storage area indicated by the index "used_idx" (the index "used_idx" in the descriptor 132a) on the VM side in the reception buffer 134.

(S61) The virtual machine 130 releases the processed area in the reception buffer 134.

(S62) The virtual machine 130 allocates the released storage area to the reception buffer 134. The virtual machine 130 updates the index "avail_idx" of the descriptor 132a by the newly allocated amount. Then, the reception process of the virtual machine 130 ends.

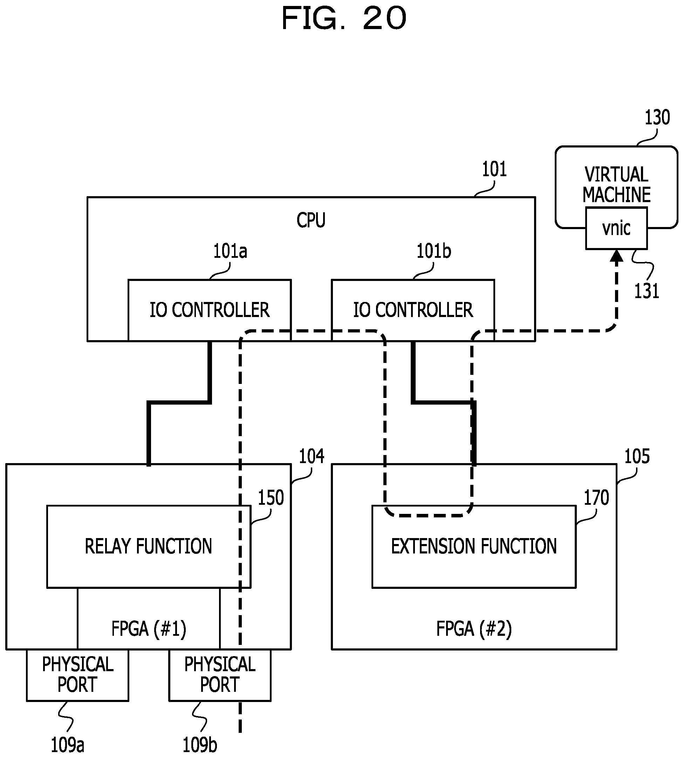

FIG. 20 is a view illustrating an example of a communication via a bus. Under the control of the arbitration unit 123, each of the FPGAs 104 and 105 may write data in the reception buffer 134 of the virtual machine 130. For example, when the received data is the extension process target, the FPGA 104 transfers the received data to the FPGA 105 via the bus 111. The FPGA 105 executes the extension process on the data and writes the processed data in the reception buffer 134 of the virtual machine 130. As a result, the virtual machine 130 may perform the reception process for the data.

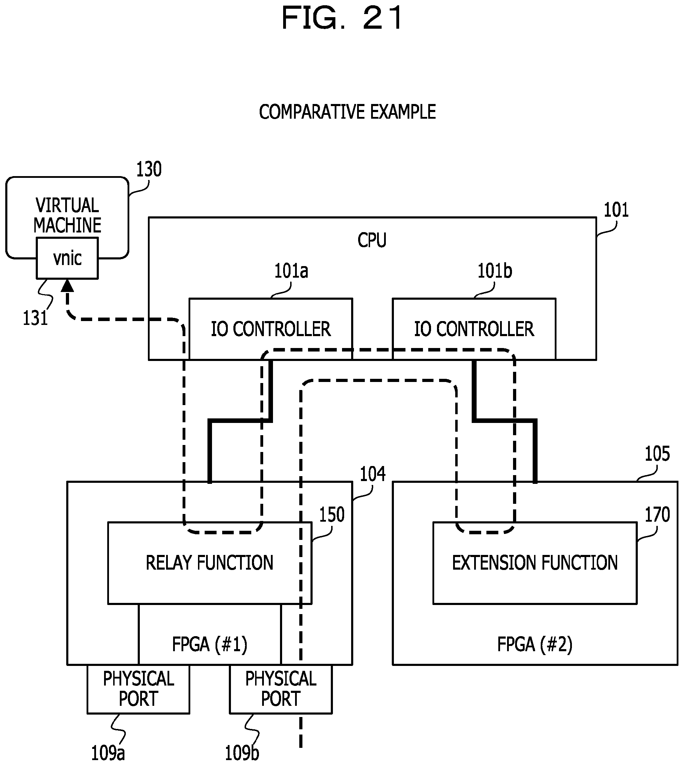

FIG. 21 is a view illustrating a comparative example of a communication via a bus. In a comparative example, a case where only the FPGA 104 writes data in the reception buffer 134 may be considered. For example, when the received data is the extension process target, the FPGA 104 transfers the received data to the FPGA 105 via the bus 111. The FPGA 105 executes the extension process on the data and transfers the processed data to the FPGA 104. The FPGA 104 writes the processed data in the reception buffer 134 of the virtual machine 130. As a result, the virtual machine 130 may perform the reception process for the data.

In the comparative example of FIG. 21, for the data of the extension process target, a return communication occurs from the FPGA 105 to the FPGA 104 via the bus 111. In this case, when the amount of data of the extension process target is relatively large, the amount of consumption of the communication band of the bus 111 may be excessive. The increase in the load on the bus 111 causes a deterioration in the overall performance of the server 100.

Therefore, as illustrated in FIG. 20, the server 100 suppresses the return communication from the FPGA 105 to the FPGA 104 by enabling a direct write of data not only from the FPGA 104 but also from the FPGA 105 into the reception buffer 134 of the virtual machine 130. Therefore, it is possible to reduce the consumption amount of the communication band of the bus 111 and suppress the performance deterioration of the server 100 due to the excessive consumption of the communication band of the bus 111.

In the meantime, in order to enable a direct write of data from both the FPGAs 104 and 105 into the reception buffer 134, it may be conceivable to adopt a software method such as an exclusive access using, for example, a lock variable or an inseparable (atomic) instruction. However, since a memory access from a device via the bus 111 tend to have a large overhead, an index is read out every several tens to 100 cycles by using the fact that the access is usually one-to-one, and the access delay is suppressed. However, in an exclusive access from a plurality of devices such as the FPGAs 104 and 105, the lock variable and the index are accessed every cycle, and the performance may be dramatically deteriorated during an offload. Therefore, a method such as an exclusive access may not be applied.

Further, for example, it is also conceivable to simply control the FPGAs 104 and 105 so that a storage area of a predetermined size is always allocated to both the FPGAs 104 and 105 by, for example, an even distribution or a ratio distribution of the reception buffer 134. However, when the reception buffer 134 is processed by the FIFO, in a case where there is another storage area in which a data writing is completed after a storage area in which data is unwritten, the data written in the another storage area may not be processed unless a data writing is completed in the storage area in which data is unwritten. Therefore, for example, until a data writing occurs in an allocation area of the FPGA 105, a process for written data in an allocation area of the FPGA 104 that exists after the allocation area may be delayed.

In contrast, the arbitration unit 123 continuously allocates a storage area of a predetermined size to the FPGA 104, which is the offload destination of the relay function. Then, when there is an allocation request, the arbitration unit 123 allocates the storage area of the reception buffer 134 corresponding to a request size to the FPGA 105, which is the offload destination of the extension function. Thereby, the processing delay may be reduced.

The reason for maintaining the allocation of the predetermined size to the FPGA 104 is that it is expected that the data written in the reception buffer 134 from the FPGA 104 in charge of the relay function are continuously generated.

Further, the reason for allocating the storage area to the FPGA 105 when the data to be written are generated is that the relay function is a function attached to the extension function and not all the data received from the outside by the FPGA 104 is the extension function target.

The arbitration unit 123 also allocates a buffer area to the FPGAs 104 and 105 so as not to affect the process of the virtual machine 130 that uses the reception buffer 134 (single queue). Therefore, it is not necessary to modify the virtual machine 130 side.

As described above, the arbitration unit 123 provides a procedure for safely accessing the single queue for reception (the reception buffer 134) of the virtual machine from multiple devices without performance deterioration. As a result, a direct transfer of data to the virtual machine is achieved from an FPGA of the relay function side for a flow that does not use the extension function, and from an FPGA of the extension function side for a flow that uses the extension function. In this way, the amount of return data on the bus 111 by use of the extension function of the reception flow of the virtual machine may be reduced without making any change to the virtual machine.

The information processing according to the first embodiment may be implemented by causing the processor 12 to execute a program. The information processing according to the second embodiment may be implemented by causing the CPU 101 to execute a program. The program may be recorded in the computer-readable recording medium 53.

For example, the program may be distributed by distributing the recording medium 53 in which the program is recorded. Alternatively, the program may be stored in another computer and distributed via a network. For example, a computer may store (install) the program recorded in the recording medium 53 or a program received from another computer in a storage device such as the RAM 102 or the HDD 103, and may read and execute the program from the storage device.

In any of the above aspects, the various features may be implemented in hardware, or as software modules running on one or more processors/computers.

Embodiments of the invention also provide a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. An information processing apparatus comprising:

   a memory configured to include a reception buffer in which data destined for a virtual machine that operates in the information processing apparatus is written; and
   a processor coupled to the memory and configured to:

   continuously allocate a first storage area of the reception buffer to a first coprocessor which is an offload destination of a relay process of a virtual switch; and
   allocate a second storage area of the reception buffer to a second coprocessor which is an offload destination of an extension process of the virtual switch when an allocation request of the reception buffer is received from the second coprocessor.

2. The information processing apparatus according to claim 1,
   wherein, when at least an area of the first storage area is released,
   the processor is configured to:

   allocate a third storage area according to a size of the released area to the first coprocessor; and
   process data written in a buffer area of the reception buffer and release the buffer area completed with process, in an allocation order of the buffer area, and
   wherein the buffer area is configured to include the first storage area, the second storage area, and the third storage area.

3. The information processing apparatus according to claim 1 or claim 2,
   wherein the processor is configured to allocate the second storage area of a size which is required by the allocation request, to the second coprocessor.

4. The information processing apparatus according to any of claims 1 to 3,
wherein, when the data destined for the virtual machine is received,
the first coprocessor is configured to:

> determine whether or not the data is a target for the extension process;
> transfer the data to the second coprocessor when the data is the target for the extension process; and
> write the data in the first storage area when the data is not the target of the extension process, and

the second coprocessor is configured to:

> receive the data which is the target of the extension process from the first coprocessor;
> perform the extension process on the data; and
> write the processed data in the second storage area.

5. The information processing apparatus according to claim 4,
wherein, when the second coprocessor receives the data which is the target of the extension process from the first coprocessor,
the second coprocessor is configured to:

> start the extension process on the data; and
> notify the processor of the allocation request.

6. The information processing apparatus according to any of claims 1 to 5,
wherein, when writing of the data to the reception buffer by the first coprocessor or writing of the data to the reception buffer after the extension process by the second coprocessor is detected by the processor,
the processor is configured to notify the virtual machine of a fourth storage area in which the writing of the data is completed, by updating information referred to by the virtual machine and indicating the forth storage area of the reception buffer.

7. The information processing apparatus according to any of claims 1 to 6,
wherein the reception buffer is a single queue.

8. An information processing method executed by a computer, the method comprising:

> continuously allocating a first storage area of a reception buffer to a first coprocessor which is an offload destination of a relay process of a virtual switch; and
> allocating a second storage area of the reception buffer to a second coprocessor which is an offload destination of an extension process of the virtual switch when an allocation request of the reception buffer is received from the second coprocessor.

9. A virtual machine connection management program that causes a computer to execute a process, the process comprising:

> continuously allocating a first storage area of a reception buffer to a first coprocessor which is an offload destination of a relay process of a virtual switch; and
> allocating a second storage area of the reception buffer to a second coprocessor which is an offload destination of an extension process of the virtual switch when an allocation request of the reception buffer is received from the second coprocessor.

# FIG. 1

INFORMATION PROCESSING APPARATUS                    1

SOFTWARE                                            20

VIRTUAL MACHINE    21

10

MEMORY    11

RECEPTION BUFFER    11a

PROCESSOR    12

15

13

COPROCESSOR (#1)

RELAY PROCESSING UNIT

13a

14

COPROCESSOR (#2)

EXTENSION PROCESSING UNIT

14a

DATA

ALLOCATION EXAMPLE OF RECEPTION BUFFER

[S1]

0

UNALLOCATED AREA

8

11a

[S2]

0

4

8

11a

[S3]

0

4

6

8

11a

RELEASE

[S4]

0

2

4

6

8

10

11a

RELEASE

[S5]

0

RELEASE

6

8

10

14

11a

▨ ALLOCATION AREA OF COPROCEESOR#1

▨ ALLOCATION AREA OF COPROCEESOR#2

# FIG. 2

# FIG. 3

# FIG. 4

SERVER ... 100

VIRTUAL MACHINE ... 130

VIRTUAL MACHINE ... 130a

VIRTUAL MACHINE ... 130b

HYPERVISOR ... 120

HARDWARE ... 110

# FIG. 5

# FIG. 6

CPU 101

101a IO CONTROLLER

101b IO CONTROLLER

104

RELAY FUNCTION 150

FPGA (#1)

PHYSICAL PORT

PHYSICAL PORT

109a 109b

105

EXTENSION FUNCTION 170

FPGA (#2)

# FIG. 7

## FIG. 8

# FIG. 9

**ARBITRATION UNIT**

INDEX HISTORY (FIFO)

| | | | |
|---|---|---|---|
| FPGA#1 | 4, 4 | n/a | ... |
| FPGA#2 | 6, 2 | n/a | ... |

fpga1 last_used_idx=2
fpga2 last_used_idx=0

FPGA#2: REQUEST NUMBER=0 ⇒2

PORT INFORMATION STORAGE UNIT

METADATA    PACKET DATA

out_port=1, ...

used_idx
avail_idx

used_idx
avail_idx

FPGA (#1)

INTER-FPGA TRANSFER PROCESSING UNIT

PORT#1 OUTPUT UNIT ...

PORT#1 INPUT UNIT ...

UPDATE UNIT

NOTIFICATION UNIT

FILTER UNIT

| FLOW RULE | OUTPUT PORT |
|---|---|
| RULE#1 | 2 |
| RULE#2 | 4 |
| ... | ... |

| PORT NO. | REQUEST NUMBER |
|---|---|
| 1 | 1⇒2 |
| 2 | 8 |
| ... | ... |
| N | 0 |

RESERVATION UNIT

EXTENSION FUNCTION PROCESSING UNIT

FPGA (#2)

# FIG. 10

VIRTUAL MACHINE 130

RECEPTION QUEUE 132

0 ----- used_idx
2
4
6
8 --- avail_idx

132a

HYPERVISOR 120

ARBITRATION UNIT 123

INDEX HISTORY (FIFO)

| FPGA#1 | 4, 4 | n/a | ... |
| FPGA#2 | 6, 2 | n/a | ... |

125

fpga1 last_used_idx=0
fpga2 last_used_idx=0

FPGA#2: REQUEST NUMBER=0 ⇒2

126

RECEPTION QUEUE FOR FPGA#1 121

0 ------- used_idx
4 --- avail_idx

121a

RECEPTION QUEUE FOR FPGA#2 122

0 ------- used_idx
2 --- avail_idx

122a

27

# FIG. 11

VIRTUAL MACHINE 130

RECEPTION QUEUE 132

```
0
2 ------- used_idx
4
6
8
10 ------- avail_idx
```

132a

HYPERVISOR 120

ARBITRATION UNIT 123

INDEX HISTORY (FIFO)

| FPGA#1 | 4, 4 | 8, 6 | ··· |
| FPGA#2 | 6, 2 | n/a | ··· |

125

fpga1 last_used_idx=2

fpga2 last_used_idx=0

FPGA#2: REQUEST NUMBER=0

126

RECEPTION QUEUE FOR FPGA#1 121

```
0
2 ------- used_idx
4
6 ------- avail_idx
```

121a

RECEPTION QUEUE FOR FPGA#2 122

```
0 ------- used_idx
2 ------- avail_idx
```

122a

# FIG. 12

130

VIRTUAL MACHINE

132

RECEPTION QUEUE

```
0
2
4 ----- used_idx
6
8
10 ---- avail_idx
```

132a

120

123

HYPERVISOR

ARBITRATION UNIT

INDEX HISTORY (FIFO)

| FPGA#1 | 4, 4 | 8, 6 | · · · |
| FPGA#2 | 6, 2 | n/a | · · · |

125

fpga1 last_used_idx=2 ⇒4

fpga2 last_used_idx=0

FPGA#2: REQUEST NUMBER=0

126

121

RECEPTION QUEUE FOR FPGA#1

```
0
2
4 ----- used_idx
6 --- avail_idx
```

121a

122

RECEPTION QUEUE FOR FPGA#2

```
0 -------- used_idx
2 --- avail_idx
```

122a

# FIG. 13

VIRTUAL MACHINE                          130    HYPERVISOR                                      120

RECEPTION QUEUE                   132              ARBITRATION UNIT                         123

0 ⌐---                                        INDEX HISTORY (FIFO)    fpga1 last_used_idx=4

2                                             | FPGA#1 | 8, 6 | n/a | ··· |    fpga2 last_used_idx=0 ⇒2
4  ----▼---- used_idx                         | FPGA#2 | 6, 2 | n/a | ··· |    | FPGA#2: REQUEST NUMBER=0 |
6  ----┘
8                                                              ⌐125                        ↖126
10  └--- avail_idx

                    ↖132a

RECEPTION QUEUE FOR            121      RECEPTION QUEUE FOR            122
FPGA#1                                   FPGA#2

0 ⌐---                                    0 ⌐--------------------------
2                                         2  --- avail_idx   used_idx
4  ------- used_idx
6  --- avail_idx

                ↖121a                                    ↖122a

# FIG. 14

```
        ┌─────────────────┐
        │   START RELAY   │
        │    FUNCTION     │
        └────────┬────────┘
                 │                    ┌─── S10
                 ▼
        ┌─────────────────────────┐
        │      RECEIVE DATA        │
        └────────┬────────────────┘
                 │                    ┌─── S11
                 ▼
        ╱─────────────────────────╲       NO
       ⟨  EXTENSION PROCESS TARGET  ⟩──────────────┐
        ╲─────────────────────────╱                │
                 │                    ┌─── S12      │
                 ▼                                  │
        ┌─────────────────────────┐                │
        │ TRANSFER FPGA FOR EXTENSION              │
        │         PROCESS          │                │
        └────────┬────────────────┘                │
                 │                                  ▼            ┌─── S13
                 │              ┌──────────────────────────────────┐
                 │              │ INQUIRE OF ARBITRATION UNIT ABOUT │
                 │              │ STORAGE DESTINATION INDEX OF      │
                 │              │      RECEPTION BUFFER             │
                 │              └────────────┬─────────────────────┘
                 │                           │              ┌─── S14
                 │                           ▼
                 │              ┌──────────────────────────────────┐
                 │              │           WRITE DATA             │
                 │              └────────────┬─────────────────────┘
                 │                           │              ┌─── S15
                 │                           ▼
                 │              ┌──────────────────────────────────┐
                 │◄─────────────│  UPDATE USED_IDX ON FPGA#1 SIDE  │
                 │              └──────────────────────────────────┘
                 ▼
           ┌──────────┐
           │   END    │
           └──────────┘
```

# FIG. 15

```
        ╭─────────────────╮
        │  START EXTENSION │
        │     FUNCTION     │
        ╰─────────────────╯
                 │
                 ▼                        S20
   ┌─────────────────────────────────────────┐
   │ RECEIVE DATA FROM FPGA FOR EXTENSION     │
   │ PROCESS                                  │
   └─────────────────────────────────────────┘
                 │
                 ▼                        S21
   ┌─────────────────────────────────────────┐
   │    START EXECUTING EXTENSION PROCESS     │
   └─────────────────────────────────────────┘
                 │
                 ▼                        S22
   ┌─────────────────────────────────────────┐
   │          UPDATE REQUEST NUMBER           │
   └─────────────────────────────────────────┘
                 │
                 ▼                        S23
   ┌─────────────────────────────────────────┐
   │    NOTIFY ARBITRATION UNIT OF ALLOCATION │
   │                 REQUEST                  │
   └─────────────────────────────────────────┘
                 │
                 ▼                        S24
   ┌─────────────────────────────────────────┐
   │  ACQUIRE ALLOCATION RESULT FROM          │
   │         ARBITRATION UNIT                 │
   └─────────────────────────────────────────┘
                 │
                 ▼                        S25
   ┌─────────────────────────────────────────┐
   │    OUTPUT DATA AFTER EXTENSION PROCESS   │
   └─────────────────────────────────────────┘
                 │
                 ▼                        S26
   ┌─────────────────────────────────────────┐
   │      UPDATE USED_IDX ON FPGA#2 SIDE      │
   └─────────────────────────────────────────┘
                 │
                 ▼
           ╭───────────╮
           │    END    │
           ╰───────────╯
```

# FIG. 16

```
        ┌─────────────────────────┐
        │    START DISTRIBUTION    │
        │   PROCESS FOR FPGA FOR   │
        │      RELAY FUNCTION      │
        └─────────────────────────┘
```

S30

DETECT RECEPTION BUFFER ALLOCATION BY VM

S31

RECORD ALLOCATION IN INDEX HISTORY BY
ALLOCATING PREDETERMINED SIZE TO FPGA#1

# FIG. 17

START DISTRIBUTION
PROCESS FOR FPGA FOR
EXTENSION FUNCTION

S40

RECEIVE ALLOCATION REQUEST FROM FPGA#2

S41

ADD REQUEST NUMBER INCLUDED ALLOCATION
REQUEST TO REQUEST NUMBER OF FPGA#2

S42

ALLOCATE UNALLOCATED AREA TO FPGA#2 AND
RECORD IT IN INDEX HISTORY

S43

SUBTRACTS ALLOCATED NUMBER FROM REQUEST
NUMBER OF FPGA#2

S44

REQUEST=0?　　NO

YES

END

# FIG. 18

START ARBITRATION PROCESS

**S50**
COMPARE INDEXES ON VM OF HEAD DATA OF BOTH FPGAS OF INDEX HISTORY AND SELECT FPGA WITH THE SMALLER INDEX

**S51**
SET FPGA SIDE INDEX OF INDEX HISTORY TO H FOR SELECTED FPGA AND CALCULATE COUNT = MIN(USED_IDX, H) LAST_USED_IDX

**S52**
count ≥ 1 ? — NO

YES **S53**
ADD COUNT TO VM SIDE USED_IDX AND LAST_USED_IDX OF FPGA

**S54**
LAST_USED_IDX = H FOR FPGA? — NO

YES **S55**
DELETE HEAD DATA OF FPGA FROM INDEX HISTORY

END

# FIG. 19

```
        ╭─────────────────╮
        │  START RECEPTION │
        │ PROCESS OF VIRTUAL│
        │     MACHINE      │
        ╰─────────────────╯
                 │
                 ▼                          S60
┌──────────────────────────────────────────┐
│ EXECUTE PROCESS ON RECEIVED DATA STORED IN │
│ AREA INDICATED BY USED_IDX ON VM SIDE IN   │
│          RECEPTION BUFFER                  │
└──────────────────────────────────────────┘
                 │
                 ▼                          S61
┌──────────────────────────────────────────┐
│          RELEASE PROCESSED AREA            │
└──────────────────────────────────────────┘
                 │
                 ▼                          S62
┌──────────────────────────────────────────┐
│ ALLOCATE RELEASED AREA TO RECEPTION BUFFER │
└──────────────────────────────────────────┘
                 │
                 ▼
             ╭────────╮
             │   END  │
             ╰────────╯
```

# FIG. 20

# FIG. 21

COMPARATIVE EXAMPLE

Europäisches
Patentamt

European
Patent Office

Office européen
des brevets

**EUROPEAN SEARCH REPORT**

Application Number

EP 20 19 2975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/095750 A1 (DRYSDALE TRACY GARRETT [US] ET AL) 5 April 2018 (2018-04-05)<br>* figures 1-3 *<br>* abstract *<br>* paragraph [0029] - paragraph [0080] *<br>* paragraph [0087] - paragraph [0109] *<br>----- | 1-9 | INV.<br>G06F9/50<br>G06F13/16<br><br>ADD.<br>G06F15/173<br>G06F15/78<br>G06F9/455 |
| X | WEI WANG ET AL: "pvFPGA: Accessing an FPGA-based hardware accelerator in a paravirtualized environment",<br>2013 INTERNATIONAL CONFERENCE ON HARDWARE/SOFTWARE CODESIGN AND SYSTEM SYNTHESIS (CODES+ISSS), IEEE, [Online]<br>29 September 2013 (2013-09-29), pages 1-9,<br>XP032524765,<br>DOI: 10.1109/CODES-ISSS.2013.6658997<br>[retrieved on 2013-11-08]<br>* the whole document *<br>----- | 1-9 | |
| A | HOEFLER TORSTEN ET AL: "sPIN : High-performance streaming Processing In the Network",<br>PROCEEDINGS OF THE INTERNATIONAL CONFERENCE FOR HIGH PERFORMANCE COMPUTING, NETWORKING, STORAGE AND ANALYSIS ON , SC '17, [Online]<br>12 November 2017 (2017-11-12), pages 1-16,<br>XP055775115,<br>New York, New York, USA<br>DOI: 10.1145/3126908.3126970<br>ISBN: 978-1-4503-5114-0<br>Retrieved from the Internet:<br>URL:https://dl.acm.org/doi/pdf/10.1145/3126908.3126970><br>[retrieved on 2021-02-11]<br>* the whole document *<br>----- | 1-9 | TECHNICAL FIELDS SEARCHED (IPC)<br><br>G06F |

The present search report has been drawn up for all claims

| Place of search | Date of completion of the search | Examiner |
|---|---|---|
| The Hague | 12 February 2021 | Wirtz, Hanno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 2975

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2021

| Patent document cited in search report | Publication date | Patent family member(s) | Publication date |
|---|---|---|---|
| US 2018095750 A1 | 05-04-2018 | CN 109690475 A | 26-04-2019 |
| | | EP 3519946 A1 | 07-08-2019 |
| | | TW 201814506 A | 16-04-2018 |
| | | US 2018095750 A1 | 05-04-2018 |
| | | WO 2018063717 A1 | 05-04-2018 |

For more details about this annex : see Official Journal of the European Patent Office, No. 12/82

**EP 3 796 168 A1**

## REFERENCES CITED IN THE DESCRIPTION

**Patent documents cited in the description**

- JP 2015039166 A

- JP 2016170669 A